# FASCICULE DE BREVET EUROPEEN

(11) **EP 3 890 922 B1**
(45) Date de publication et mention de la délivrance du brevet: **03.01.2024**
(21) Numéro de dépôt: 19817418.7
(22) Date de dépôt: 28.11.2019
(51) Int. Cl.: G01B 5/20, G01B 11/24, G01B 21/04

(54) **SYSTÈME ET PROCÉDÉ DE MESURE DU PROFIL D'UNE PIÈCE**
SYSTEM UND VERFAHREN ZUR MESSUNG DES PROFILS EINES WERKSTÜCKS
SYSTEM AND METHOD FOR MEASURING THE PROFILE OF A WORKPIECE

(30) Priorité: 04.12.2018 CH 14902018
(43) Date de publication de la demande: 13.10.2021
(73) Titulaire: WatchOutCorp SA, 1400 Yverdon-les-Bains (CH)
(72) Inventeur: JACOT, Philippe, 2022 Bevaix (CH); LAPORTE, Sébastien, 74300 Thyez (FR); PERRET, Frédéric, 74940 Annecy-le-Vieux (FR)
(74) Mandataire: P&TS SA (AG, Ltd.)
(86) Numéro de dépôt international: PCT/IB2019/060289
(87) Numéro de publication internationale: WO 2020/115621

(56) Documents cités:
- DE-A1- 19 824 107
- DE-A1-102015 205 569
- US-A1- 2008 239 327
- US-A1- 2018 018 778
- US-A1- 2018 094 914

## Description

### Domaine technique

La présente invention concerne le domaine de la mesure des dimensions d'un objet ou d'une pièce. En particulier, la présente invention concerne le domaine de la détermination par capteur (tactile ou non tactile) des dimensions d'un objet ou d'une pièce.

Ce type de mesure est utilisé dans de nombreux domaines appliquant la métrologie dimensionnelle, parmi lesquels notamment, mais non exclusivement le domaine de l'usinage de pièces, en particulier par machine-outil ou tout autre usinage par enlèvement de matière, mais également pour de la fabrication par addition de matière. Cette mesure est notamment également utile dans le cas de contrôle d'usure ou lors d'opération de maintenance.

Dans le domaine de la machine-outil, il existe un besoin de connaître précisément les dimensions et/ou le profil d'une pièce, afin d'assurer une gamme d'usinage conforme au plan d'usinage développé pendant la mise au point.

### Etat de la technique

Différents systèmes visant à mesurer les coordonnées d'un objet de manière opto-tactile ont été proposés, en particulier des systèmes comprenant une sonde flexible.

Le document US2005259271A utilise un scanner sous la forme d'une tête de palpage montée sur une extension de sonde flexible. Un premier système optique formant une unité monobloc avec le scanner détecte la position de la tête de palpage dans un plan x, y tandis qu'un deuxième système optique autonome détecte la position de la tête de palpage dans la direction z.

Les documents US2016370172A et US2005000102A présentent des systèmes de mesure de coordonnées comprenant une tête de palpage dont la position est suivie par un capteur optique monté coaxialement avec la sonde. Dans le document US2016370172A, la sonde est munie d'une extension flexible avec un élément de contact déviant au contact de la pièce et portant une marque de référence située dans l'alignement vertical de la partie tactile de la sonde. Dans le document US2005000102A, l'instrument de mesure de coordonnées comporte une tête de palpage montée sur une extension et dont la position est identifiée par un système optique dont l'axe optique est aligné avec la tête de palpage.

Dans ces solutions, il n'est pas possible ou pas toujours possible de mesurer le déplacement de la tête de palpage dans les trois directions de l'espace, en particulier si la tête de palpage est cachée, notamment dans un évidement ou un alésage de la pièce.

Le document US2009144999A décrit une sonde pour la mesure du contour intérieur d'une pièce creuse. Cette sonde comporte une barre dont l'extrémité inférieure porte une tête de palpage qui vient en contact avec la surface à mesurer et dont l'extrémité supérieure émerge de la pièce et porte une cible dont la position est repérée par un capteur optique, notamment à laser. La barre est rendue mobile par montage sur une articulation sphérique offrant également un degré de liberté en translation. Cet agencement exige un support pour l'articulation sphérique qui est montée sur la pièce à mesurer, ce qui engendre une manipulation supplémentaire. De plus, la calibration de la sonde exige un montage précis et reproductible de la sonde/du support sur la pièce à mesurer.

Le document US2018094914 se rapporte à un système de mesure d'u profil externe d'une pièce : une pointe de mesure suit tactilement le contour de la pièce et un système de caméras permet de suivre le déplacement de la pointe de mesure. Le document DE19824107 se rapporte à une méthode de détermination optique de la rugosité de surface : la position de l'élément palpeur est détectée à l'aide d'un capteur optique. Le document US2018018778 concerne un système de mesure de mouvement d'une machine de mesure de coordonnées ou d'une machine-outil : plusieurs caméras prennent des images de la portion inférieure d'une sonde susceptible de venir en contact avec une pièce, et qui porte des marques formant une structure à visualiser. Le document DE102015205569 concerne l'étalonnage d'une partie mobile d'une machine à mesurer tridimensionnelle en déterminant l'erreur par mesure de la déviation d'une sphère de référence par des capteurs dont les axes optiques se croisent en un point de référence. Le document US2008239327 se rapporte à une méthode d'étalonnage global d'un système de mesure par palpeur tactile multi-vues basé sur la vision, utilisant des marqueurs sur un palpeur.

Les solutions de l'art antérieur sont tributaires de prises de mesure par rapport à des repères extérieurs à la pièce et au système de mesure, à savoir que des mesures intermédiaires par rapport à des axes de précision interviennent dans la procédure de mesure. Ceci ajoute des étapes dans la prise de mesure et entraîne le cumul d'incertitudes, voire d'erreurs de mesure, d'où la fourniture d'un résultat final concernant la mesure qui n'est pas aussi précis que souhaité.

Ces solutions ne permettent donc pas de disposer d'un dispositif rapide à mettre en place et à utiliser, et surtout qui permette de mesurer facilement le profil, notamment le profil interne, d'un objet ou d'une pièce, et en particulier d'une pièce creuse.

De plus, ces solutions ne sont pas toujours d'une précision suffisante pour certaines applications.

### Bref résumé de l'invention

Un but de la présente invention est de proposer une technologie de mesure permettant d'effectuer une mesure du profil, et notamment du profil interne d'un objet ou d'une pièce, exempte des limitations des techniques de mesure connues.

Un autre but de l'invention est de proposer une technologie permettant d'effectuer une mesure du profil, et notamment du profil interne d'un objet ou d'une pièce, qui fournisse une mesure très précise des portions d'une pièce.

Un autre but de l'invention est de proposer une technologie permettant d'effectuer une mesure du profil, et notamment du profil interne d'un objet ou d'une pièce, en un minimum d'étapes de mesure.

Selon l'invention, ces buts sont atteints notamment au moyen d'un système de mesure d'un profil externe de pièce ou de profil interne d'une pièce creuse, comprenant :
- - une pièce dont le profil interne ou externe est à mesurer,
   - un capteur comportant une sonde , et un premier élément de référence solidaire de la sonde via une portion de support, une base et un système de guidage reliant la sonde avec la base en permettant un déplacement relatif entre eux selon au moins un degré de liberté définissant une direction de mesure,
   - ledit capteur étant arrangé par rapport à la pièce de sorte que lors du déplacement du capteur par rapport à la pièce selon une direction différente de la direction de mesure, ladite sonde est apte à suivre le contour interne ou externe de la pièce tandis que le premier élément de référence est apte à rester à l'extérieur de la pièce en effectuant un trajet reproduisant le trajet de la sonde (le long du contour interne ou externe de la pièce, et
   - un dispositif de prise de vue apte à prendre des images représentant au moins une portion de l'extérieur de la pièce et le premier élément de référence, ce par quoi par comparaison entre les images prises par le dispositif de prise de vue, le déplacement relatif entre le premier élément de référence et la portion de l'extérieur de la pièce dans ladite direction de mesure est détecté par des moyens de calcul, et un déplacement relatif entre la sonde et la base qui correspond à un décalage dans la direction de mesure le long du profil mesuré de la pièce est déduit dudit déplacement relatif entre le premier élément de référence et la portion de l'extérieur de la pièce (50) dans ladite direction de mesure.

Cette solution présente notamment l'avantage par rapport à l'art antérieur de ne pas nécessiter d'identifier directement la position de la sonde ou d'une tête de palpage qui serait en contact avec le profil de la pièce puisque c'est le premier élément de référence, restant dans tous les cas à l'extérieur de la pièce pendant la mesure, qui est apte à reproduire le déplacement de la sonde et qui sert d'élément de référence pour la détermination de la position du point de contact entre la face de la pièce et la sonde. Ainsi, le premier élément de référence sert d'élément de référence de la position de la sonde par rapport au référentiel qui est la pièce elle-même.

Ceci se produit en premier lieu en cas de détermination du profil externe d'une pièce ou de détermination du profil interne d'une pièce creuse, que la partie creuse soit une ouverture débouchante ou non (trou débouchant ou trou borgne). Egalement, en second lieu dans le cas de la détermination du profil interne d'une pièce, grâce au décalage spatial entre la sonde et le premier élément de référence, on peut laisser la sonde à l'intérieur de la pièce, dans une portion creuse, tout en conservant le premier élément de référence à l'extérieur de la pièce, ce qui permet de garder l'accès (par exemple optiquement ou par contact) au premier élément de référence et ainsi faciliter grandement la détermination de la position de la sonde via la détermination de la position du premier élément de référence par rapport à la pièce.

La sonde présente ainsi au moins un degré de liberté par rapport à la pièce, lorsque le système de mesure est immobile, dans la position de mesure du profil d'une pièce, et pendant le mouvement de la pièce par rapport au système de mesure. Cette possibilité de mouvement de la sonde (ou partie mobile du capteur) par rapport au reste du système de mesure lui permet de suivre le contour (profil interne ou profil externe) de la pièce à contrôler. On comprend que le dispositif de prise de vue présente un champ optique (ou champ de vue) tel qu'il permet de voir et donc de prendre une image comportant à la fois une portion de l'extérieur de la pièce et le premier élément de référence. De cette façon, la prise d'images successives lors du mouvement de la pièce par rapport au système de mesure permet au dispositif de prise de vue de voir par le mouvement du premier élément de référence dans le champ de vue, quel est le profil correspondant à ce parcours du premier élément de référence.

Selon une disposition, le contour interne ou le contour externe ou à la fois le contour interne et le contour externe de la pièce forme une face de révolution autour d'un axe. Cet axe est par exemple un axe parallèle à l'axe principal du capteur.

Selon l'invention, le capteur comprend en outre une base et un système de guidage reliant la sonde avec la base. De cette façon, on obtient un mouvement contrôlé de la sonde par rapport au reste du système de mesure quand celui-ci est dans une position de mesure par rapport à une pièce.

Selon une disposition possible, ledit système de guidage autorise un seul degré de liberté entre la sonde et la base. Ainsi, on dispose d'un système de mesure simple dans sa conception et permettant à la sonde de suivre la variation du contour de la pièce dans une direction autorisée par le degré de liberté, ce qui convient et est suffisant dans un grand nombre de cas.

Selon une autre disposition, ledit système de mesure comprend en outre un deuxième élément de référence solidaire de la base et disposé à l'extérieur de la pièce, ledit deuxième élément de référence étant placé de sorte que le dispositif de prise de vue est apte à voir simultanément ledit premier élément de référence, ledit deuxième élément de référence et ladite portion de l'extérieur de la pièce. En effet, le deuxième élément de référence reste dans tous les cas à l'extérieur de la pièce dont on mesure le profil interne ou externe. Cet arrangement permet de disposer avec le deuxième élément de référence d'un élément immobile du système de mesure, servant d'autre repère fixe par rapport auquel on peut visualiser (via le dispositif de prise de vue) les déplacements du premier élément de référence, et en conséquence les déplacements de la sonde, notamment dans au moins une direction autorisée par le système de guidage.

Selon une première possibilité de mise en oeuvre de l'invention, la sonde comporte une tête de palpage apte à suivre et détecter le contour interne ou externe de la pièce par contact. Une telle tête de palpage suit physiquement le contour de la pièce à mesurer, et notamment le contour interne, donc caché, lors de la mesure du contour interne.

Selon une deuxième possibilité de mise en oeuvre de l'invention, la sonde comporte une tête de détection apte à suivre et détecter le contour interne ou externe de la pièce sans contact. Par exemple, de façon non limitative, il s'agit d'une sonde fonctionnant de façon optique (tête de détection optique), ou encore par exemple un capteur de proximité (tête de détection de distance ou de proximité) ou encore un capteur électromagnétique ou acoustique (tête de détection électromagnétique ou acoustique).

Selon une disposition, le dispositif de prise de vue comporte une caméra et une source lumineuse apte à éclairer simultanément ladite portion de l'extérieur de la pièce et le premier élément de référence. Cet agencement permet, notamment lorsque la sonde est disposée dans une pièce creuse et que le premier élément de référence est disposé en dehors de la pièce, de permettre à la caméra de fournir une image suffisamment contrastée.

Selon une disposition, la caméra présente un champ de vue permettant de voir ladite portion de l'extérieur de la pièce et le premier élément de référence. Cet agencement permet, notamment lorsque la sonde est disposée dans une pièce creuse et que le premier élément de référence est disposé en dehors de la pièce, de permettre à la caméra de fournir une image de la portion de l'extérieur de la pièce et du premier élément de référence.

Selon une disposition, le système de guidage comporte des moyens de rappel permettant le retour de la partie mobile du capteur, et donc de la sonde, dans une position de repos par rapport à la base lorsque la sonde n'est plus en interaction avec le contour interne ou externe de la pièce. Ainsi, pendant l'interaction entre la sonde et le contour de la pièce, à savoir notamment le palpage ou mise en contact avec appui lorsque la sonde est une tête de palpage, on garantit une interaction effective (notamment un contact effectif) garantissant une position de la sonde, donc du premier élément de référence, correspondant au contour de la pièce. S'il s'agit d'une interaction sans contact, on garantit une détection effective entre la sonde et le premier élément de référence pour permettre la mesure. De plus, lorsque la mesure est effectuée, ces moyens de rappel permettent à la partie mobile du capteur, et donc à la sonde, de revenir dans une position de repos, dans laquelle il n'y a pas de sollicitation (mécanique ou autre) dans le système de mesure, en particulier dans la chaîne de transmission (notamment chaîne cinématique) entre le premier élément de référence et la sonde. Ces moyens de rappel peuvent prendre plusieurs formes, parmi lesquelles et de façon non limitative, au moins un ou plusieurs des éléments suivants : élément déformable et élastique, lame ressort (plane, curviligne, en forme de spiral ou autre...), ressort hélicoïdal, Ces moyens de rappel peuvent aussi découler de la structure du système de guidage qui engendre un retour naturel dans cette position de repos du fait de la simple gravité.

Selon une disposition, le système de guidage comporte entre la sonde (partie mobile du capteur) et la base une liaison coulissante ou bien une liaison basculante telle qu'un pivot avec des éléments mécaniques, des éléments magnétiques, des éléments hydrauliques.....

L'invention concerne également un procédé de mesure du profil d'une pièce, notamment avec le système de mesure ou de détermination de profil de pièce tel que décrit dans le présent texte. En particulier, l'invention concerne un procédé de mesure du profil interne d'une pièce à l'aide d'un système de mesure tel que décrit dans le présent texte. Selon une possibilité, le procédé de mesure d'un profil d'une pièce creuse, comprend les étapes suivantes :
i) fourniture d'un capteur comportant une sonde et un premier élément de référence solidaire de la sonde, une base et un système de guidage reliant la sonde avec la base en permettant un déplacement relatif entre eux selon au moins un degré de liberté définissant une direction de mesure,, et d'un dispositif de prise de vue,
ii) fourniture d'une pièce dont on souhaite déterminer le profil,
iii) placement du capteur de sorte que la sonde détecte un point du contour de la pièce tandis que le premier élément de référence est à l'extérieur de la pièce et dans le champ de vue du dispositif de prise de vue,
iv) déclenchement du système de prise de vue et formation d'une image représentant au moins une portion de l'extérieur de la pièce et ledit élément de référence,
v) déplacement du capteur par rapport à la pièce selon un mouvement dans une direction différente de la direction de mesure et permettant à la sonde de rester à l'intérieur de la pièce et de suivre le contour de la pièce, tandis que le premier élément de référence reste en dehors de la pièce en effectuant le même mouvement que la sonde,
vi) effectuer les étapes iv) et v) pour d'autres points du contour de la pièce.

L'invention concerne également un procédé de mesure du profil externe d'une pièce, notamment à l'aide d'un système de mesure tel que décrit dans le présent texte. Selon une possibilité, le procédé de mesure d'un profil externe d'une pièce, comprend les étapes suivantes :
i) fourniture d'un capteur comportant une sonde, un premier élément de référence solidaire de la sonde, une base et un système de guidage reliant la sonde avec la base en permettant un déplacement relatif entre eux selon au moins un degré de liberté définissant une direction de mesure, et fourniture d'un dispositif de prise de vue,
ii) fourniture d'une pièce dont on souhaite déterminer le profil externe,
iii) placement du capteur de sorte que la sonde est à l'extérieur de la pièce et détecte un point du profil externe de la pièce tandis que le premier élément de référence est également à l'extérieur de la pièce et dans le champ de vue du dispositif de prise de vue,
iv) déclenchement du système de prise de vue et formation d'une image représentant au moins une portion de l'extérieur de la pièce et ledit élément de référence,
v) déplacement du capteur par rapport à la pièce selon un mouvement dans une direction différente de la direction de mesure et permettant à la sonde de suivre le contour externe de la pièce, tandis que le premier élément de référence reste en dehors de la pièce en effectuant le même mouvement que la sonde,
vi) effectuer les étapes iv) et v) pour d'autres points du contour externe de la pièce.

D'une façon générale, l'invention concerne aussi un procédé de mesure du profil, notamment interne ou externe, d'une pièce. Selon une possibilité, un tel procédé de mesure d'un profil d'une pièce, comprenant les étapes suivantes :
i) fourniture d'un capteur comportant une sonde, un premier élément de référence solidaire de la sonde, une base et un système de guidage reliant la sonde avec la base en permettant un déplacement relatif entre eux selon au moins un degré de liberté définissant une direction de mesure, et fourniture d'un dispositif de prise de vue,
ii) fourniture d'une pièce dont on souhaite déterminer le profil,
iii) placement du capteur de sorte que la sonde détecte un point du contour de la pièce tandis que le premier élément de référence est à l'extérieur de la pièce et dans le champ de vue du dispositif de prise de vue,
iv) déclenchement du système de prise de vue et formation d'une image représentant au moins une portion de l'extérieur de la pièce et ledit élément de référence,
v) déplacement du capteur par rapport à la pièce selon un mouvement dans une direction différente de la direction de mesure et permettant à la sonde de suivre le contour de la pièce, tandis que le premier élément de référence reste en dehors de la pièce en effectuant le même mouvement que la sonde,
vi) effectuer les étapes iv) et v) pour d'autres points du contour de la pièce.

Selon une disposition supplémentaire de chacun de ces procédés de mesure, selon l'invention, des moyens de calcul effectuent en outre les étapes suivantes :
a) pour chaque image formée par ledit dispositif de prise de vue, calcul de la position relative entre le premier élément de référence et la portion de l'extérieur de la pièce, et
b) reconstitution du profil (interne ou externe) mesuré de la pièce à partir desdites positions relatives du premier élément de référence successivement calculées. A cet effet, les moyens de calcul effectuent en outre les étapes suivantes :
   - comparaison des images prises par le dispositif de prise de vue afin de détecter le déplacement relatif entre le premier élément de référence et la portion de l'extérieur de la pièce dans ladite direction de mesure, et
   - déduction d'un déplacement relatif entre la sonde et la base qui correspond à un décalage dans la direction de mesure le long du profil mesuré de la pièce.

### Brève description des figures

Des exemples de mise en oeuvre de l'invention sont indiqués dans la description illustrée par les figures annexées dans lesquelles :
La figure 1 illustre en perspective un premier mode de réalisation du système de mesure selon la présente invention,
La figure 2 illustre la vue partielle en coupe selon la direction II de la figure 1 du système de mesure selon le premier mode de réalisation de la présente invention,
Les figures 3 à 5 illustrent de face les différentes étapes de mesure avec le système de mesure de la figure 1,
La figure 6 illustre en coupe et de face le principe d'une utilisation du système de mesure de la figure 1 pour la mesure du profil interne d'une pièce,
La figure 7 illustre en perspective et de manière schématique le principe d'un procédé de mesure avec le système de mesure selon le premier mode de réalisation de la présente invention de la figure 1, dans le cas de la mesure du profil interne d'une pièce,
La figure 8 illustre de face une variante du premier mode de réalisation du système de mesure selon la présente invention,
La figure 9 représente de manière plus schématique de face la variante du premier mode de réalisation du système de mesure selon la présente invention, illustrant le principe de la mesure effectuée dans le cas d'un profil interne de pièce,
Les figures 10A et 10B montrent des étapes du procédé de mesure avec la variante selon la figure 9 du premier mode de réalisation du système de mesure selon la présente invention,
Les figures 11 et 12 représentent schématiquement le principe général du système de mesure selon la présente invention,
Les figures 13A et 13B illustrent les étapes de mesure avec un deuxième mode de réalisation du système de mesure selon la présente invention,
Les figures 14A et 14B illustrent les étapes de mesure avec un troisième mode de réalisation du système de mesure selon la présente invention,
Les figures 15A et 15B illustrent les étapes de mesure avec un quatrième mode de réalisation du système de mesure selon la présente invention,
Les figures 16 et 17A à 17F montrent respectivement le dispositif de prise de vue pouvant être utilisé dans le système de mesure selon l'invention et les étapes de traitement ou d'analyse possible de l'image prise par le dispositif de prise de vue lors de la mise en oeuvre du procédé de mesure selon la présente invention.

### Exemple(s) de mode de réalisation de l'invention

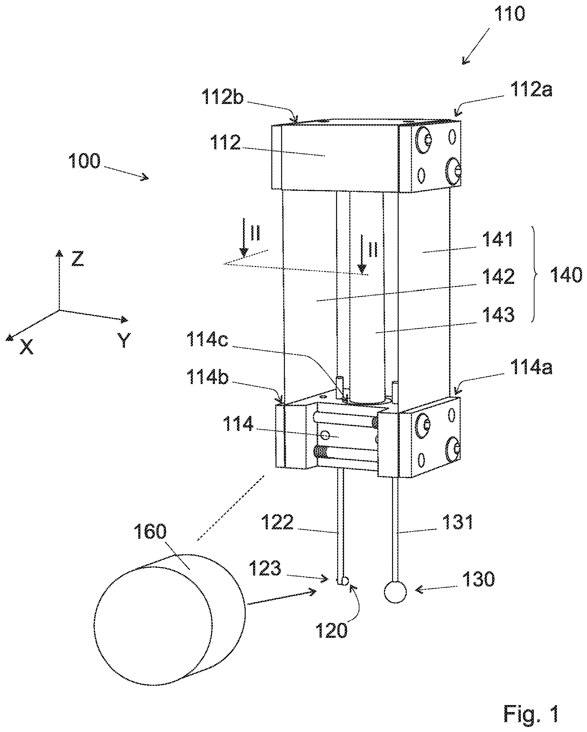

Si l'on se reporte à la figure 1, un système de mesure 100 comprenant un capteur 110 selon la présente invention est représenté dans sa position de repos, sans contact avec une pièce à mesurer. Le capteur 110 comporte une base 112, ici sous la forme d'un prisme en forme de parallélépipède rectangle, rigide et quasiment indéformable. La plus grande dimension de cette base 112 définit l'axe Y, ou axe de mesure. On distingue sur cette base 112, selon cet axe Y, une première extrémité 112a (à droite sur les figures 1 à 7) et une deuxième extrémité 112b (à gauche sur les figures 1 à 7).

A l'aplomb de la base 112, le capteur 110 comporte une portion de support 114 présentant une forme et des dimensions proches de celles de la base 112. Cette portion de support 114 est également rigide et quasiment indéformable. On distingue sur cette portion de support 114, selon cet axe Y, une première extrémité 114a (à droite sur les figures 1 à 7) et une deuxième extrémité 114b (à gauche sur les figures 1 à 7).

Un système de guidage 140 déformable et élastique relie la base 112 et la portion de support 114 du capteur 110 selon un axe Z ou axe principal du capteur 110, cet axe Z étant vertical sur les figures et lors de la prise de mesure. La base 112 et la portion de support 114 sont alignées entre elles selon l'axe Z dans la position de repos du capteur 110.

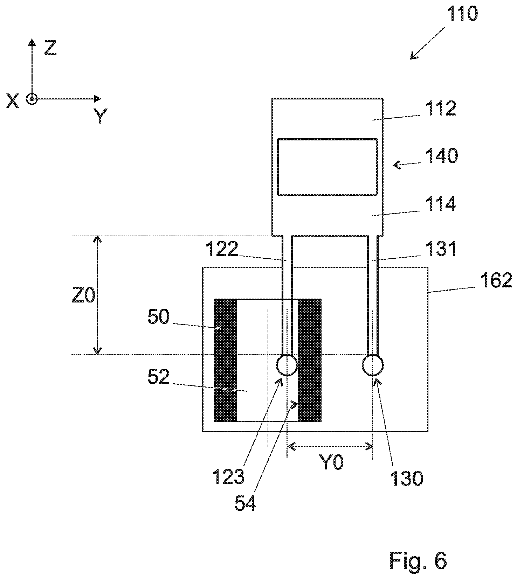

Dans l'alignement de l'axe principal Z du capteur 110, la portion de support 114 se prolonge, depuis son côté tourné de manière opposée à la base 112, par une tige de palpage 122 et par une tige d'un premier élément de référence 131, également parties du capteur 110. Cette tige de palpage 122 et cette tige d'un premier élément de référence 131 sont montées par l'une de leurs extrémités libres sur la portion de support 114. Dans la position de repos la tige de palpage 122 et la tige d'un premier élément de référence 131 sont parallèles entre elles et à l'axe principal Z. La tige de palpage 122 et la tige d'un premier élément de référence 131 sont distantes (et équidistantes) l'une de l'autre selon l'axe de mesure Y d'une distance Y0 (voir la figure 6). Ainsi, la tige de palpage 122 et la tige d'un premier élément de référence 131 définissent un plan (Y, Z).

Ainsi, dans la position de repos du capteur 110, la direction orthogonale aux tiges de palpage 122 et du premier élément de référence 131 et qui passe par ces deux tiges 122 et 131 est l'axe de mesure Y. On définit un axe transversal X qui est orthogonal au plan (Z, Y) et qui est orthogonal à la tige de palpage 122 et à la tige du premier élément de référence 131. Les axes X, Y et Z définissent un repère orthogonal, de préférence orthonormé. Ces tiges 122 et 131 sont par exemple des tiges métalliques, notamment en acier.

L'extrémité libre (extrémité inférieure sur les figures 1 et 2 à 8) de la tige de palpage 122 se termine par une tête de palpage 123 formant une tête de sonde 120 pour le capteur 110 du système de mesure 100. Cette tête de palpage 123 est par exemple en métal, et notamment dans le même métal ou alliage métallique que la tige de palpage 122. La tête de palpage 123 est par exemple (voir la figure 6) formée d'une sphère avec l'axe de la tige de palpage 21 passant par le centre de la sphère. Dans une forme de réalisation alternative visibles sur les figures 1, 3 à 5 et 7, la tête de palpage 123 est formée d'une portion de sphère, en l'occurrence une demi-sphère, montée sur le côté de l'extrémité libre de la tige de palpage 122, qui est tourné en direction de la tige du premier élément de référence 131: en d'autres termes, l'axe de la demi-sphère (tête de palpage 123) est orienté selon l'axe Y. Dans tous les cas, la tête de palpage 123 présente une portion qui fait saillie depuis la tige de palpage 122, dans la direction Y, et en direction de la tige du premier élément de référence 131. C'est-à-dire qu'il existe une portion de la tête de palpage 123 qui dépasse au-delà de la tige de palpage 122 selon l'axe Y, cette portion en saillie de la tête de palpage 123 étant tournée vers la tige de référence 24 (tête de référence 25). De cette façon, comme on le verra plus loin, on peut mettre la tête de palpage 123 en contact avec une surface d'une pièce sans que la tige de palpage 122 ne soit également en contact avec la surface de la pièce.

L'extrémité libre (extrémité inférieure sur les figures 1 et 3 à 8) de la tige du premier élément de référence 131 se termine par un premier élément de référence 130. Ce premier élément de référence 130 est par exemple en métal, et notamment dans le même métal ou alliage métallique que la tige du premier élément de référence 131. Le premier élément de référence 130 est par exemple (voir les figures 1 à 7) formé d'une sphère avec l'axe de la tige du premier élément de référence 131 passant par le centre de la sphère.

Ainsi, dans le mode de réalisation représenté sur les figures 1 à 8, la tête de palpage 123 est montée à l'extrémité libre de la tige de palpage 122 et le premier élément de référence 130 est monté à l'extrémité libre de la tige du premier élément de référence 131. Egalement, dans le mode de réalisation représenté sur les figures 1 à 8, la tige de palpage 122 et la tige du premier élément de référence 131 sont de même longueur, ou plus exactement dépassent de la portion de support 114 d'une même longueur selon l'axe Z. De cette façon, la tête de palpage 123 et le premier élément de référence 130 sont distants de la portion de support 114 d'une même distance Z0 (voir la figure 6). En d'autres termes, la tête de palpage 123 et le premier élément de référence 130 sont en dessous et à la même distance de la portion de support 114.

Pour permettre de reporter le déplacement selon l'axe Y de la tête de palpage 123 sur le premier élément de référence 130, le système de guidage 140 qui relie la portion de support 114 à la base 112 est déformable et élastique au moins selon l'axe Y. Différents modes de mise en oeuvre sont possibles : parmi lesquels un ou plusieurs éléments élastiques montés entre la portion de support 114 et la base 112. Dans le cas des modes de réalisation illustrés sur les figures 1 à 8, on utilise deux lames ressorts 141, 142 à titre de système de guidage 140. Ces deux lames ressorts 141, 142 sont identiques et, dans la position de repos du capteur 110, parallèles entre elles, à l'axe principal Z et à l'axe transversal X. En d'autres termes, le plan des lames ressorts 141, 142 au repos est parallèle au plan X, Z, donc le plan des lames ressorts 141, 142 au repos est orthogonal à l'axe Y. comme on peut le voir sur la figure 1, une première lame ressort 141 est montée entre la première extrémité 112a de la base 112 et la première extrémité 114a de la portion de support 114. Une deuxième lame ressort 142 est montée entre la deuxième extrémité 112b de la base 112 et la deuxième extrémité 114b de la portion de support 114. Alternativement, on pourrait utiliser quatre lames ressorts parallèles entre elles et aux axes Z et X, et montées deux à deux, une paire de lames ressorts montée entre la première extrémité 112a de la base 112 et la première extrémité 114a de la portion de support 114 et une autre paire de lames ressorts montée entre la deuxième extrémité 112b de la base 112 et la deuxième extrémité 114b de la portion de support 114.

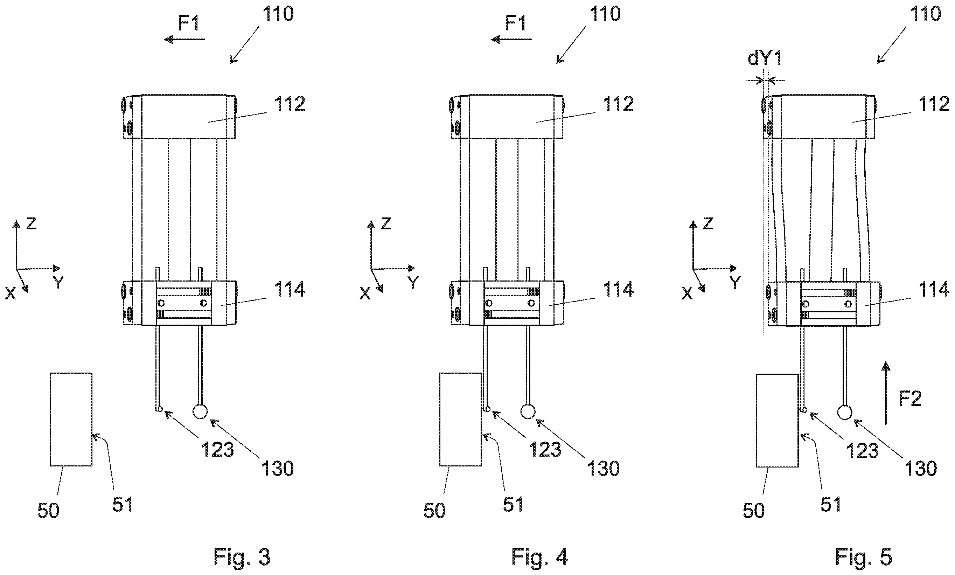

Avec cet agencement, dans la position de repos du capteur 110 (position de repos du système de mesure 100), on forme un cadre avec la base 112, la portion de support 114 et les deux lames ressorts 141 et 142. Ce cadre forme un rectangle dans le plan (Y, Z) dans la position de repos du capteur 110, avec la longueur du rectangle parallèle à l'axe Z et la largeur du rectangle parallèle à l'axe Y. Avec cet agencement, dans la position de mesure du capteur 110, on peut déformer ce rectangle comme on peut le voir sur la figure 5. Dans cette situation, la base 112 et la portion de support 114 restent parallèles entre elles et à l'axe Y, avec un décalage dY1 selon l'axe Y de la portion de support 114 et des tiges (têtes) du premier élément de référence 131 (130) et du deuxième élément de référence 151 (150), et les lames ressorts 141 et 142 sont déformées. Dans cette position de mesure, le profil déformé des lames ressorts 141 et 142 comporte dans le plan (X, Z) deux parties d'extrémité sensiblement rectilignes et une partie centrale formant une courbe avec un point d'inflexion.

Ainsi, la partie mobile du capteur 110 forme une sonde 120 comportant la portion de support 114 et les éléments qui lui sont attachés : la tige de palpage 122, la tête de palpage 123, le premier élément de référence (tige 130 et tête 131) et le système de guidage 140 (lames ressorts 141 et 142). Quand on repasse de la position de mesure à la position de repos, à savoir que la tête de palpage 123 n'est plus en contact avec la face de la pièce, les lames ressorts 141 et 142 reprennent leur forme initiale rectiligne et la portion de support 114 revient à la verticale de la base 112.

Selon le mode de réalisation représenté sur les figures 1 à 5 et 8, le système de guidage 140 comporte en outre un barreau 143 dont la première extrémité 143a (extrémité supérieure sur les figures) est fixée de manière solidaire à la base 112 et dont la deuxième extrémité 143b (extrémité inférieure sur les figures) est montée sur la portion de support 114 par une liaison coulissante au moins selon la direction Y. Dans ce mode de réalisation, la liaison entre la deuxième extrémité 143b du barreau 140c est la portion de support 114 est également coulissante selon la direction Z, ce qui permet d'absorber la déformation des lames ressort 141, 142 ou plus généralement du système de guidage 140 selon la direction Z.

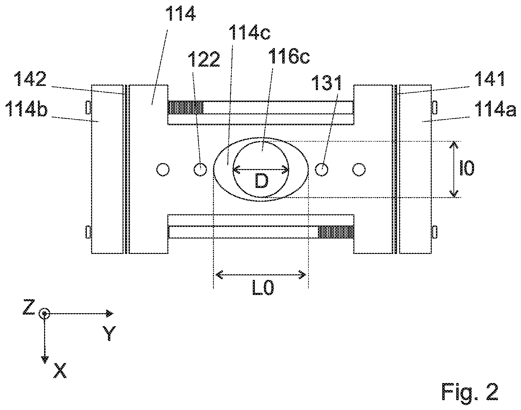

En pratique, dans l'agencement représenté sur les figures 1 à 5 et 8, la portion de support 114 comporte une rainure 114c en regard de la base 112, ouverte sur la face supérieure de la portion de support 114. Comme on peut le voir sur la figure 2, la rainure 114c présente une largeur I0 suffisante selon l'axe X pour loger sans débattement l'extrémité libre ou deuxième extrémité 143a du barreau 143. Comme on peut le voir sur la figure 2, la rainure 114c présente une longueur L0 selon l'axe Y pour loger et permettre le déplacement de l'extrémité libre ou deuxième extrémité 143b du barreau 143 vers la première extrémité 114a ou la deuxième extrémité 114b de la portion de support 114 selon une distance maximale pré-établie correspondant au maximum admissible pour le décalage dY1 (dY1 ₘₐₓ). Ainsi, si le barreau 143 présente une forme de cylindre avec une section circulaire de diamètre D, la rainure 114c présente une largeur I0 égale ou sensiblement supérieure à D (I0 est compris entre D et 1,05D), et une longueur L0 égale à D+2(dY1 ₘₐₓ). Cette rainure 114c est donc de forme générale allongée selon l'axe Y. A titre d'exemple, cette rainure 114c peut être rectangulaire, ovale ou oblongue (boutonnière). Cette rainure 114c est débouchante ou non débouchante (rainure borgne) sur la face inférieure de la portion de support 114. A titre d'exemple, le maximum admissible pour le décalage dY1 (dY1 ₘₐₓ) est de quelques milllimètres, par exemple de 2, 5, 7 ou 10 millimètres, à droite et à gauche sur les figures 2 à 5.

On se reporte sur les figures 3 à 5, montrant le capteur 110 dans le cas de la mesure du profil externe d'une pièce 50, donc d'une face 51 de la pièce formant une face externe 51. De préférence, cette pièce 50 est une pièce de révolution autour de l'axe Z, pour la face à mesurer, à savoir pour la face externe 51 (et éventuellement également pour la face interne 54.

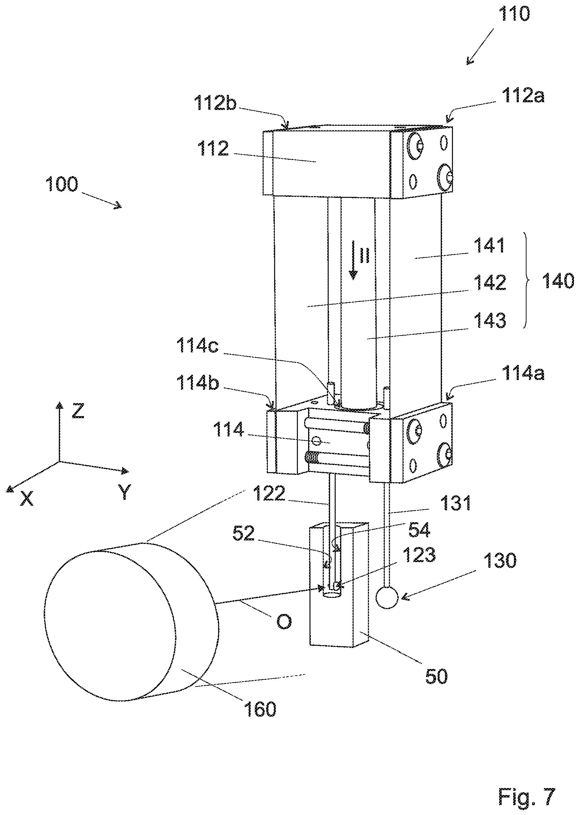

D'une manière plus générale, un tel procédé de mesure du profil externe d'une pièce comporte les étapes suivantes :
a) on fournit un capteur 110 tel que décrit dans le présent texte,
b) on fournit une pièce 50 dont on souhaite déterminer le profil externe, à savoir la mesure du profil de la face 51 (face externe),
c) on fournit un dispositif de prise de vue 160 (capteur externe comme sur la figure 7) apte à déterminer la position du premier élément de référence 130, (ici, comme on le voit sur la figure 3, le capteur 110 est en position de repos , avec la portion de support 114 et la base 112 en position initiale, alignées l'une au-dessus de l'autre selon l'axe Z)
d) on place la tête de palpage 123 contre la face externe 51, tandis que la premier élément de référence 130 reste à distance, c'est-à-dire à l'extérieur)de ladite pièce 50 (mouvement selon la flèche F1 de la figure 3, par rapprochement entre le capteur 110 et la face externe 51 de la pièce 50, selon l'axe Y, pour aboutir à la position intermédiaire de la figure 4 dans laquelle le système de guidage 140 n'est pas déformé)
e) on déplace le capteur 110 de sorte que la tête de palpage 123 reste en contact avec la face externe 51 de la pièce, avec la base 112 qui se déplace par rapport à la portion de support 114 et par rapport à la pièce 50 selon l'axe Y (déplacement relatif entre la sonde 120 et la base112), (mouvement selon la flèche F1 de la figure 4, avec la base 112 du capteur 110 qui se déplace par rapport à la pièce 50 selon l'axe Y d'une distance dY1, pour aboutir à position de mesure du capteur 110) , et
f) on identifie la position du premier élément de référence 130 par ledit dispositif de prise de vue 160, ce qui permet de déterminer la position de la tête de palpage 123 sur la face 51 de la pièce 50, et
g) on déplace le capteur 110 de sorte que la tête de palpage 123 de la sonde 120 vienne sur un autre emplacement de la face externe 51 de la pièce 50 en gardant le contact entre la tête de palpage 123 et la face externe 51 de la pièce 50 (sur la figure 5, déplacement vertical selon l'axe Z selon la flèche F2, mais cela peut être un déplacement selon la direction X et/ou la direction Y selon la géométrie de la pièce 50), puis on reproduit les étapes f) et g) jusqu'à la fin de la détermination du profil externe (ou de la portion du profil externe) de la pièce 50.

Dans le cas d'une pièce 50 creuse (alésage, évidement, trou, lumière, logement 52), on procède d'une manière similaire, en plaçant la tête de palpage 123 de la sonde 120 à l'intérieur de la pièce 50 (dans le logement 52), contre la face interne 54 de la pièce 50 tandis que le premier élément de référence 130 reste à l'extérieur de la pièce 50, comme on l'explique en relation avec les figures 6 et 7. Sur la figure 6, la pièce 50 comporte un trou débouchant 52 à titre de logement et sur la figure 7, la pièce comporte un trou borgne 52 à titre de logement. De préférence, cette pièce 50 est une pièce de révolution autour de l'axe Z, pour la face à mesurer, à savoir pour la face interne 54 (et éventuellement également pour la face externe 51).

Dans ce cas, un tel procédé de mesure du profil interne d'une pièce 50 comporte les étapes suivantes (voir les figures 6 et 7) :
a) on fournit un capteur 110,
b) on fournit une pièce creuse 50 dont on souhaite déterminer le profil interne (face interne 54 du logement 52),
c) on fournit un dispositif de prise de vue 160 (capteur externe comme sur la figure 7) apte à déterminer la position du premier élément de référence 130,
d) on place la tête de palpage 123 à l'intérieur de ladite pièce creuse 50, avec la tête de palpage 123 contre la face interne 54, tandis que le premier élément de référence 130 reste à l'extérieur de ladite pièce creuse 50 (ici, comme on le voit sur la figure 6, le capteur 110 est en position de repos , avec la sonde 120, et notamment la portion de support 114 et la base 112, en position initiale, la portion de support 114 et la base 112 alignées l'une au-dessus de l'autre selon l'axe Z),
e) on déplace le capteur 110 de sorte que la tête de palpage 123 entre (ou reste) en contact avec la face interne 54 de la pièce 50, et
f) on identifie la nouvelle position du premier élément de référence 130 par ledit dispositif de prise de vue 160, ce qui permet de déterminer la nouvelle position de la tête de palpage 123 dans la pièce 50, et
g) on déplace le capteur 110 sur un autre emplacement de la face interne 54 de la pièce 50 en gardant le contact entre la tête de palpage 123 et la face interne 54 de la pièce 50, puis on reproduit les étapes f) et g) jusqu'à la fin de la détermination du profil interne de la pièce 50.

Le dispositif de prise de vue 160 (capteur externe) sert à localiser et à déterminer la position du premier élément de référence 130 et la variation de sa position, à chaque fois que le capteur 110 est déplacé par rapport à la face 51 ou 54 de la pièce 50 à mesurer, donc que la tête de palpage 123 s'est déplacée sur la face à mesurer 51 ou 54. En effet, dans le cas de la figure 7, si la nouvelle position du premier élément de référence 130 correspond strictement à un déplacement selon Z conforme à celui du capteur 110 alors la nouvelle position de la tête de palpage 123 donc le nouveau point mesuré du profil interne de la pièce 50 reste dans la même position en Y que précédemment (dY=0). Dans un autre cas non représenté, dans lequel la face 54 à mesurer n'est pas parallèle à la direction verticale Z, mais correspond par exemple à un tronc de cône d'axe Z, alors après déplacement selon l'axe vertical Z du capteur 110, la nouvelle position du premier élément de référence 130 correspond non seulement à un déplacement selon Z conforme à celui du capteur 110 mais également à un déplacement selon Y alors la nouvelle position de la tête de palpage 123 donc le nouveau point mesuré du profil interne de la pièce 50 vient sur une nouvelle position en Y par rapport à la position précédente du capteur (dY n'est pas 0). A cet effet, le dispositif de prise de vue 160 comporte un capteur optique. Dans ce cas, on peut prendre un dispositif de prise de vue 160 dont l'axe optique O est disposé de manière orthogonal au plan (Y, Z) (voir la figure 7), et ce afin de pouvoir détecter les déplacements du premier élément de référence 130 (et donc indirectement de la tête de palpage 123) selon l'axe Y.

Un tel dispositif de prise de vue 160 est par exemple formé d'un système optique, en particulier un système optique centré, comprenant un ensemble de composants optiques et un système d'acquisition d'images. Un tel système d'acquisition d'images permet de prendre des photographies et/ou des vidéos, et est par exemple une caméra ou un appareil photographique, notamment un appareil photographique numérique.

Le dispositif de prise de vue 160 présente des propriétés intrinsèques lui permettant de disposer d'un champ de vue 162 qui recouvre le premier élément de référence 130 situé à l'extérieur de la pièce 50. On peut voir sur la figure 6 la projection dans le plan (Y, Z) du champ de vue 162 ou angle solide au travers duquel le dispositif de prise de vue 160 est sensible aux rayonnements électromagnétiques (lumière). Dans le cas représenté à la figure 6, le champ de vue 162 du dispositif de prise de vue 160 comporte le premier élément de référence 130, et il recouvre ou englobe également la pièce 50 ou au moins la portion de la pièce 50 comportant la face à mesurer 54 (face interne 54), notamment la portion de la face externe située dans le plan (Y, Z) du champ de vue 162 et correspondant à la face à mesurer (si c'est la face externe 51) ou en regard de la face à mesurer 54 (si c'est la face interne 54).

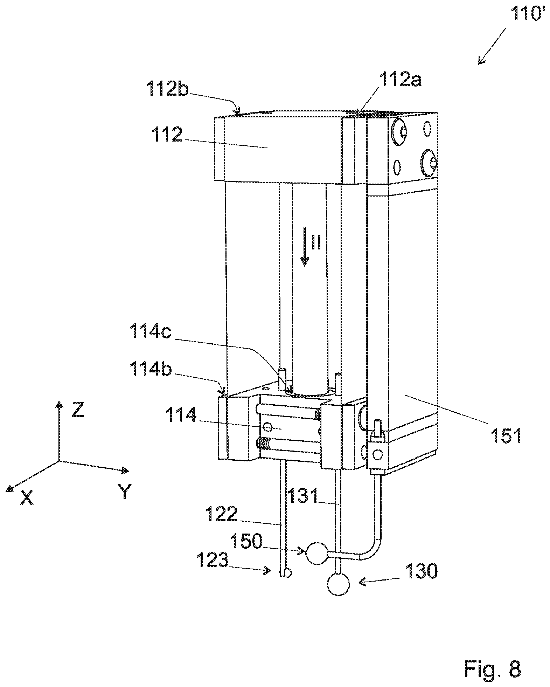

Selon une variante du premier mode de réalisation illustré sur la figure 8, le capteur 110' comprend en outre un deuxième élément de référence 150 monté de façon solidaire à la base 112 et situé à proximité du premier élément de référence 130, et dans tous les cas à l'extérieur de la pièce 50 (à l'avant et au-dessus du premier élément de référence 130 dans la disposition de la figure 8) . Plus précisément, la tige du deuxième élément de référence 151 est fixé sur le côté de la base 112 formant la première extrémité 112a de la base et qui se situe à l'aplomb de la première extrémité de la portion de support 114 et du premier élément de référence 130. Egalement, la forme et la longueur de la tige du deuxième élément de référence 151 qui relie rigidement la base 112 au deuxième élément de référence 150, sont agencées pour éviter tout contact et toute collision entre le premier élément de référence 130 et le deuxième élément de référence 150. Dans cet exemple de réalisation, le deuxième élément de référence 150 est une sphère de taille analogue à la sphère constituant le premier élément de référence 130. Dans le présent texte, le capteur portant la référence 110' correspond donc au cas de la présence d'un deuxième élément de référence 150 coopérant avec le premier élément de référence 130 pour permettre de faire la mesure. En effet, on comprend que le deuxième élément de référence 150 étant solidaire de la base 112, il est fixe par rapport à cette base 112, tandis que la sonde 120 et en particulier le premier élément de référence 13 est mobile par rapport à la base 112.

Grâce à ce deuxième élément de référence 150, on peut détecter le décalage selon l'axe Y de la tête de palpage 123, ledit décalage (non représenté) étant dû à la flexion de la tige de palpage 122 lors de l'appui de la tête de palpage 123 contre une face à mesurer 51 ou 54. Dans ce cas, dans les procédés de mesure précédemment décrits, on fournit en outre un deuxième élément de référence 150 monté de façon solidaire à la base 112 et situé à proximité du premier élément de référence 130, et dans lequel pendant l'étape f) de mesure, on détecte en outre le déplacement relatif (notamment selon l'axe Y) entre le premier élément de référence 130 et le deuxième élément de référence 150, et on prend en compte ce déplacement relatif dans la détermination de la position de la tête de palpage 123. On comprend donc que le champ de vue 162 du dispositif de prise de vue 160 comporte aussi le deuxième élément de référence 150.

Un tel deuxième élément de référence 150 est également utile aussi pour la mesure du profil externe car le même phénomène de flexion selon l'axe Y de la tige de palpage 122 est susceptible d'intervenir, et ce toujours sans l'existence d'une quelconque flexion de la tige du premier élément de référence 131 puisque le premier élément de référence 130 n'est pas en contact avec une surface, donc n'est pas soumis à un appui qui pourrait engendrer une force de rappel de la part de la surface et donc une déformation par flexion de la tige du premier élément de référence 131.

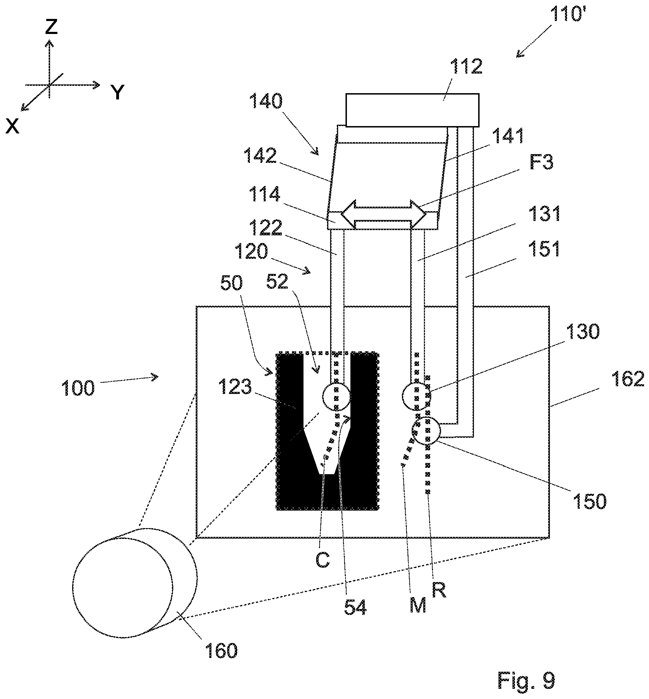

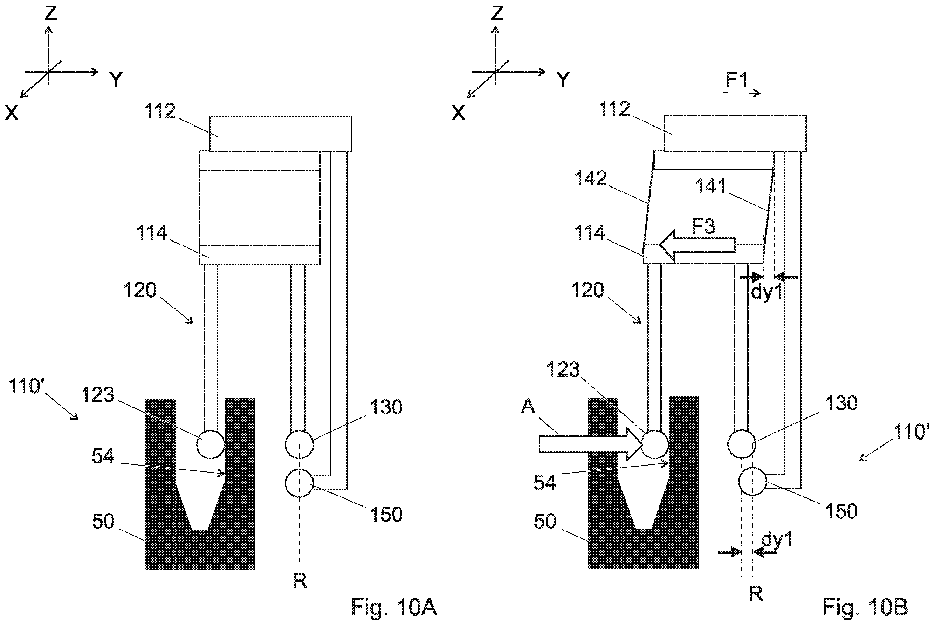

Dans le cas de cette variante du premier mode de réalisation, le procédé de mesure du profil interne d'une pièce 50 comporte les étapes suivantes (voir les figures 9, 10A et 10B) :
a) on fournit un capteur 110' tel que décrit précédemment,
b) on fournit une pièce creuse 50 dont on souhaite déterminer le profil interne (face interne 54 du logement 52),
c) on fournit un dispositif de prise de vue 160 (capteur externe comme sur la figure 9) apte à déterminer la position relative entre le premier élément de référence 130 et le deuxième élément de référence 150,
d) on place la tête de palpage 123 à l'intérieur de ladite pièce creuse 50, avec la tête de palpage 123 contre la face interne 54, tandis que le premier élément de référence 130 et le deuxième élément de référence 150 restent à l'extérieur de ladite pièce creuse 50 (ici, comme on le voit sur la figure 10A, le capteur 110' est en position de repos , avec la portion de support 114 et la base 112 en position initiale, alignées l'une au-dessus de l'autre selon l'axe Z, ainsi que le premier élément de référence 130 et le deuxième élément de référence 150 alignés l'un au-dessus de l'autre selon l'axe Z sur une ligne de référence R),
e) on déplace le capteur 110' par rapport à la pièce 50 selon l'axe Y (flèche F1, figure 10B) de sorte que la tête de palpage 123 entre (ou reste) en contact avec la face interne 54 de la pièce 50 : cela engendre une force d'appui (flèche A) du premier élément de référence 130 contre la face interne 54 et la déformation des lames ressorts 141 et 142 avec un déplacement opposé et de même intensité (flèche F3) de la portion de support 114 par rapport à la base 112, cela engendre un décalage dY1 en direction Y du premier élément de référence 130 par rapport au deuxième élément de référence 150 (figure 10B avec décalage selon la direction Y, dans le sens de la flèche F3 de toute la sonde 120), et
f) on identifie la position du premier élément de référence 130 par rapport au deuxième élément de référence 150 par ledit dispositif de prise de vue 160, ce qui permet de déterminer la position de la tête de palpage 123 dans la pièce 50, et
g) on déplace le capteur 110' en direction Z (direction verticale) sur un autre emplacement de la face interne 54 de la pièce 50 en gardant le contact entre la tête de palpage 123 et la face interne 54 de la pièce 50, puis on reproduit les étapes f) et g) jusqu'à la fin de la détermination du profil interne de la pièce 50. De cette façon, comme on le voit sur la figure 9, on construit point à point au fur et à mesure des positions successives prises par le premier élément de référence 130, une ligne de mesure M représentant le contour interne de la face interne 54. On comprend que l'on utilise comme référence la ligne de référence R verticale passant par le deuxième élément de référence 150 (par exemple par son centre ou un autre point), et que la ligne de mesure M est une transposition à l'extérieur de la pièce 50 de la ligne C (figure 9) du contour interne (profil interne) à mesurer.

Dans ce premier mode de réalisation, le capteur 110 ou 110' forme, avec la base 112 formant la référence fixe dans le capteur, une structure à déformation parallèle comprenant l'une au-dessus de l'autre en parallèle la base 112 et la portion de support 114 qui sont chacune indéformables, et les deux lames ressort 141 et 142 déformables selon la direction horizontale Y. Ceci permet de définir un axe de mesure, ici l'axe Y et permet d'appliquer une force d'appui de la tête de palpage 123 sur la pièce 50. Cette force d'appui dépend des caractéristiques des lames ressort 141 et 142 (longueur, largeur, épaisseur) et de leur déformation.

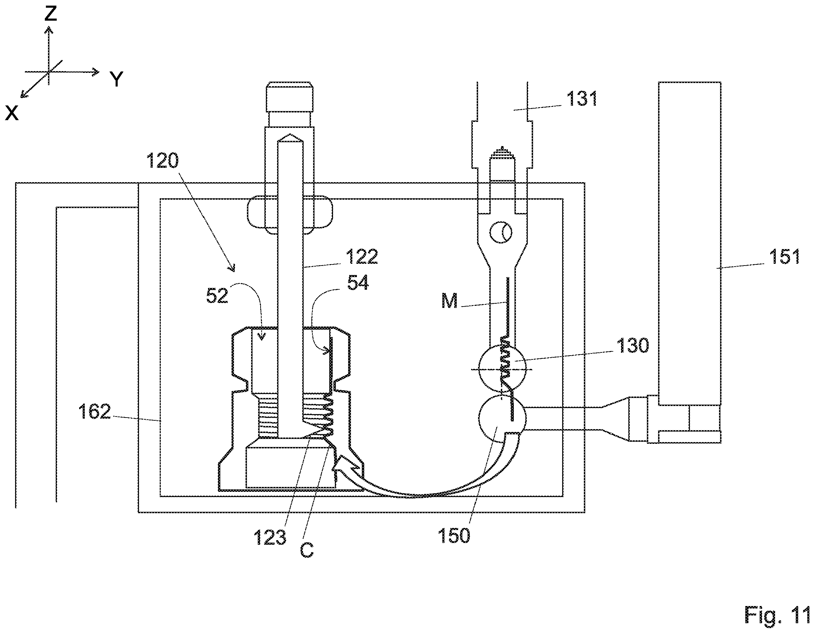

Dans ce premier mode de réalisation, mais aussi de manière générale, l'invention permet, comme on le voit sur la figure 11, de suivre très précisément le contour interne (ou externe) de la pièce 50 le long de la face interne 54 (externe 51), par la tête de palpage 123 de la sonde 120 qui reste en contact avec la pièce 50. Dans les modes de réalisation présentés, la reconstitution et le suivi du contour s'effectue dans la direction verticale Z (orientation de la ligne de mesure M et de la ligne de contour C à reconstituer), mais on peut envisager d'effectuer cette reconstitution et ce suivi du contour selon une autre direction, notamment une direction horizontale, par exemple selon la direction X, ou une autre direction dans le plan (X, Y), ou encore selon l'une première de ces directions précédentes pour une portion de contour puis selon une deuxième de ces directions précédentes pour changer de portion de contour et revenir à la première de ces directions précédentes pour visualiser cette nouvelle portion de contour. Malgré le fait que cette tête de palpage 123 est invisible depuis l'extérieur de la pièce 50, et ce du fait de sa position à l'intérieur du logement 52, l'invention permet de visualiser son déplacement sur la face à mesurer 54, et ce via le premier élément de référence 130. Le système de guidage 140 permet un déplacement de la tête de palpage 123 par rapport à la base 112 dans une ou plusieurs directions.

L'invention permet via le dispositif de prise de vue 160 qui est disposé avec un champ de vue 162 incluant le premier élément de référence 130 et le contour extérieur de la pièce et/ou le deuxième élément de référence 150, de prendre des images successives lors du déplacement du premier élément de référence 130 et de mesurer sa position relative par rapport au contour extérieur de la pièce 50 (et éventuellement par rapport au deuxième élément de référence 150). Ces images permettent de former point à point la ligne de mesure M, ce qui reconstitue la ligne C du contour interne à mesurer. Ceci est rendu possible car le système de mesure transfère le déplacement de la tête de palpage 123 lorsqu'elle suit le contour interne (ou externe) de la pièce 50, et donc le profil interne (ou externe) de la pièce 50, au premier élément de référence 130 qui est à l'extérieur de la pièce. La ligne de mesure M de la figure 9 correspond au profil interne de la pièce 50 le long de la direction verticale Z en un emplacement (un point) de la pièce (du logement 52) dans un plan horizontal parallèle au plan (X, Y). Pour reconstituer tout le profil interne (externe) de la pièce 50, à savoir toute la surface de la face interne (externe) 54 (52), on doit reprendre les étapes de mesure pour reconstituer une autre ligne de mesure M' passant par un autre emplacement (un point) de la pièce (du logement 52) dans ce plan horizontal parallèle au plan (X, Y), et ainsi de suite pour le nombre de points nécessaires. La reconstitution de la ligne de mesure M revient à reproduire en dehors de la pièce 50 le contour d'une « tranche » de la pièce 50 dans un plan parallèle à l'axe vertical Z et orthogonal au plan (X,Y). En reconstituant également d'autres tranches, chaque tranche du contour de la pièce 20 étant située dans un autre plan parallèle à l'axe vertical Z et orthogonal au plan (X,Y), décalé d'un angle thêta du plan de la tranche précédemment reconstituée, on obtient par addition d'images la juxtaposition des lignes de mesure M, M' etc dans un espace tridimensionnel. Ceci est d'autant plus rapide dans le cas d'une pièce 50 de révolution qui peut être reconstituée en quelques tranches.

Une étape préliminaire de calibration préliminaire est effectuée afin de déterminer exactement la position relative entre le premier élément de référence 130 et la position de la tête de palpage 123, ce qui permet de transférer ensuite la ligne M de mesure pour obtenir la ligne C du contour interne que l'on cherche à mesurer et qui est invisible depuis l'extérieur de la pièce. A cet effet, selon une possibilité, on effectue, avec le dispositif de prise de vue 160, une prise d'image du capteur 110 ou 110' sans la pièce 50, afin de définir la position relative du premier élément de référence 130 et de la tête de palpage 123 dans la position de repos du capteur 110 ou 110'.

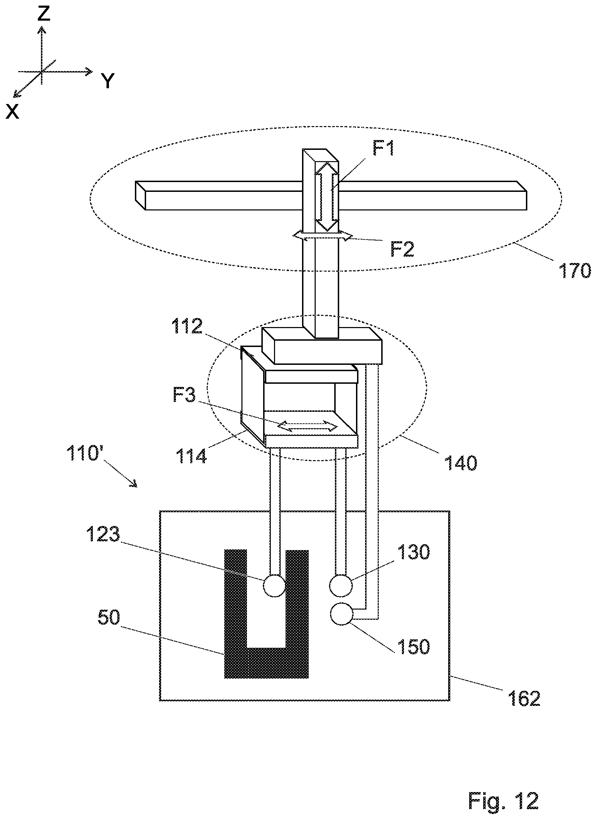

Le capteur 110 ou 110' peut être tenu par sa base 112 par un organe de préhension ou un organe de support (représenté de manière schématique sur la figure 12) et déplacé par tout système de déplacement tel qu'un bras articulé commandé par des systèmes de commande et des arbres motorisés 170 afin de permettre le déplacement relatif entre le capteur 110 ou 110' et la pièce 50 selon :
- un mouvement horizontal selon l'axe Y selon la flèche F1 de la figure 12, et/ou
- un mouvement vertical selon l'axe Z selon la flèche F2 de la figure 12.

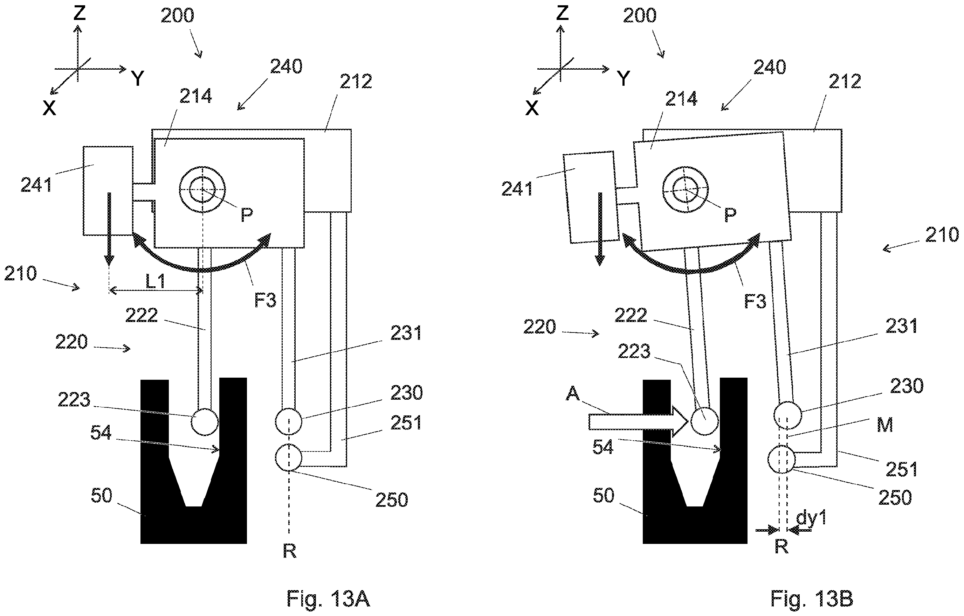

On se reporte maintenant aux figures 13A et 13B représentant un système de mesure 200 selon un deuxième mode de réalisation de l'invention. Dans ce cas, les éléments du système de mesure 200 similaires à ceux du premier mode de réalisation présenté précédemment (système de mesure 100) portent un signe de référence qui est celui du premier mode de réalisation augmenté d'une valeur de 100. On retrouve un capteur 210 comprenant :
- une portion de support 214 prolongée verticalement vers le bas d'une tige de palpage 222 portant à son extrémité libre une tête de palpage 223 et en parallèle une tige de premier élément de référence 231 portant à son extrémité libre le premier élément de référence 230,
- une base 232 prolongée verticalement vers le bas d'une tige 251 de deuxième élément de référence portant à son extrémité libre un deuxième élément de référence 250. Une variante non représentée pourrait ne pas comprendre ce deuxième élément de référence 250 mais seulement la base 232.

La portion de support 214 et la base 212 sont placées l'une devant l'autre (selon la direction horizontale X) avec un système de guidage 240 autorisant un mouvement de rotation entre eux autour d'un axe P parallèle à la direction horizontale X. Cette direction X est orthogonale à la direction horizontale Y de mesure séparant entre eux la tête de palpage 223 et le premier élément de référence 230. A cet effet, le système de guidage 240 reliant la portion de support 214 et la base 212 peut revêtir plusieurs conceptions, et notamment comporter un arbre (non représenté) parallèle à l'axe P et disposé à l'aplomb (la verticale sur les figures 13A et 13B, soit selon la direction Z) de la tête de palpage 223. Cet arbre traverse la portion de support 214 et la base 212, et est monté fixe par rapport à l'un des deux parmi la portion de support 214 et la base 212 et est monté mobile par rapport à l'autre des deux parmi la portion de support 214 et la base 212, ce qui constitue un palier. Le système de guidage 240 comporte en outre optionnellement un ressort spiral (non représenté) d'axe parallèle à l'axe P (éventuellement coaxial avec l'axe P) entourant ledit arbre avec son extrémité intérieure fixée sur l'arbre et son extrémité extérieure fixée à l'autre des deux parmi la portion de support 214 et la base 212. Ce mouvement de rotation du système de guidage 240 autour de l'axe P (voir la flèche F3 sur les figures 13A et 13B) est facilité par la présence d'une masselotte 241 reliée à l'extérieur de la portion de support 214, avec un décalage selon la direction Y entre la portion de support 214 et la masselotte 241. Ainsi, cette masselotte 241 sert de contrepoids à l'ensemble formé de la tête de palpage 223 et du premier élément de référence 230. On peut modifier la masse de cette masselotte 241 ainsi que la distance L1 qui la sépare de l'arbre (de l'axe P), et donc de la tête de palpage 223, et de façon à former un bras de levier réglable.

Dans ce cas, la sonde 220 (tête de palpage 223 à l'extrémité libre de la tige de palpage 222) est reliée à la partie fixe du système de mesure par un système de guidage 240 autorisant uniquement une rotation par rapport à un axe P orthogonal à la direction Y de la mesure. Il s'agit donc en l'espèce d'un système de guidage 240 pivotant. D'autres conceptions sont bien entendu possibles pour ce système de guidage pivotant entre la sonde 220 et la partie fixe du capteur 210 (par exemple la base 212), formant un système de guidage 240 autorisant un mouvement de rotation entre eux autour d'un axe P parallèle à la direction horizontale X.

On forme ainsi une structure de type pendule qui travaille de la même façon que le capteur 110' selon la variante du premier mode de réalisation et permet de définir un axe de mesure, selon la direction Y. Cette structure permet d'assurer une force d'appui A constante et extrêmement faible de la tête de palpage 223 sur la face interne 54 (ou externe 51) de la pièce, et ce quelle que soit la déformation du ressort spiral. Dans ce cas, le système de guidage 240 autorise un degré de liberté de la sonde 220 qui est un mouvement de rotation autour de l'axe P, parallèle à l'axe X. Le retour dans la position de repos de la sonde 220 (notamment de la portion de support 214 et des éléments qui lui sont attachés) s'effectue par simple gravité une fois que la tête de palpage 223 n'est plus en contact avec une face de la pièce 50. L'utilisation de ce capteur 210 en association avec un dispositif de prise de vue 160 permet de constituer un système de mesure de profil de pièce selon un procédé de mesure identique à celui déjà décrit en relation avec le premier mode de réalisation.

Un tel agencement forme un système de mesure 200 dans lequel :
- la pièce 50 est creuse et le contour interne de la pièce 50 forme une face 54 de révolution autour d'un axe de révolution (cet axe de révolution est par exemple parallèle à l'axe principal du capteur 110, par exemple selon l'axe Z),
- la sonde 220 comporte une tête de palpage 223 apte à détecter par contact le contour interne la pièce 50 et à suivre le contour interne la pièce 50 avec un degré de liberté selon une direction de mesure (direction Y) perpendiculaire audit axe de révolution, cette direction de mesure (direction Y) séparant entre eux la tête de palpage 223 et le premier élément de référence 230,
- le système de guidage 240 comporte une liaison basculante entre la sonde 220 et la base 212 autour d'un axe (P) perpendiculaire audit axe de révolution et orthogonal à la direction de mesure (direction Y).
On comprend que ce système de mesure 200 comporte en outre un deuxième élément de référence 250 solidaire de la base 212 et situé à l'extérieur de la pièce, le dispositif de prise de vue 160 étant apte à prendre une image comprenant en outre le deuxième élément de référence 250, ce par quoi la variation de la position relative entre le premier élément de référence 230 et le deuxième élément de référence 250 permet la mesure du profil du contour interne de la pièce 50.

Un agencement tel que celui selon les figures 13A et 13B permet la mise en oeuvre d'un procédé de mesure tel que précédemment décrit, dans lequel on effectue en outre les étapes suivantes :
- on compare les images prises par le dispositif de prise de vue 160 afin de détecter le déplacement relatif entre le premier élément de référence 130 et la portion de l'extérieur de la pièce 50 dans ladite direction de mesure, et
- on en déduit un déplacement relatif entre la sonde 120 et la base 112 qui correspond à un décalage dans la direction de mesure le long du profil mesuré de la pièce 50.
   En particulier, lorsque la pièce 50 est creuse et le contour interne de la pièce 50 forme une face 54 de révolution autour d'un axe de révolution (Notamment d'un axe de révolution parallèle audit axe principal Z du capteur 110),
- la sonde 220 comporte une tête de palpage 223 apte à détecter par contact le contour interne la pièce 50 et à suivre le contour interne la pièce 50 avec un degré de liberté selon une direction Y de mesure perpendiculaire audit axe de révolution (notamment une direction Y de mesure perpendiculaire à l'axe principal Z du capteur 110), cette direction Y de mesure séparant entre eux la tête de palpage 223 et le premier élément de référence 230,
- le système de guidage 240 comporte une liaison basculante entre la sonde 220 et la base 212 autour d'un axe P perpendiculaire audit axe de révolution et orthogonal à la direction Y de mesure.
dans le mode de mise en oeuvre illustré sur les figures 13A et 13B, le capteur 210 comporte en outre un deuxième élément de référence 250 solidaire de la base 212 et situé à l'extérieur de la pièce 50, le dispositif de prise de vue 160 étant apte à prendre une image comprenant en outre le deuxième élément de référence 250, ce par quoi la variation de la position relative entre le premier élément de référence 230 et le deuxième élément de référence 250 permet la mesure du profil du contour interne de la pièce 50.

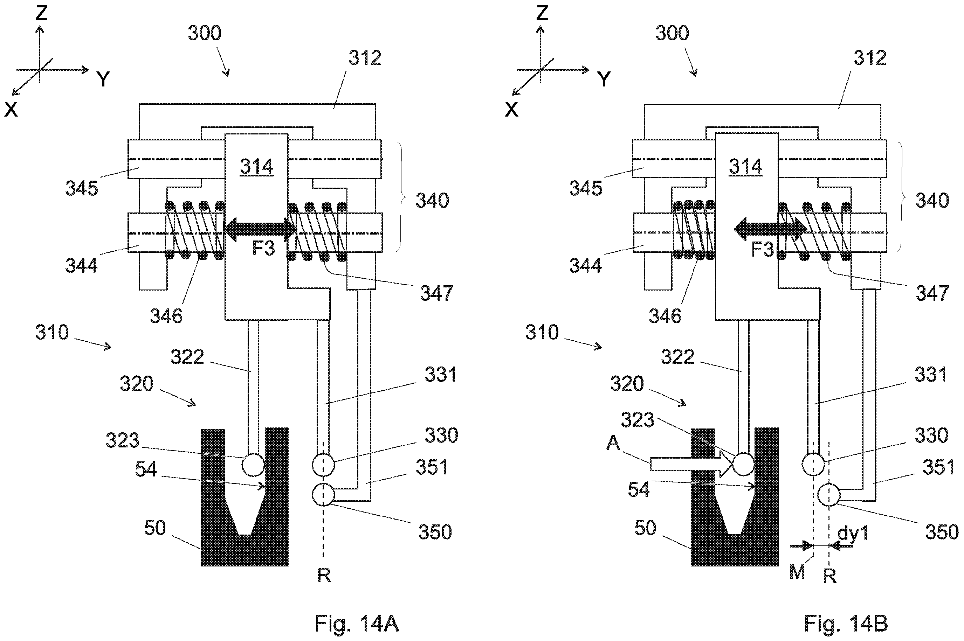

On se reporte maintenant aux figures 14A et 14B représentant un système de mesure 300 selon un troisième mode de réalisation de l'invention. Dans ce cas, les éléments du système de mesure 300 similaires à ceux du premier mode de réalisation présenté précédemment portent un signe de référence qui est celui du premier mode de réalisation augmenté d'une valeur de 200. On retrouve un capteur 310 comprenant :
- une portion de support 314 prolongée verticalement vers le bas d'une tige de palpage 322 portant à son extrémité libre une tête de palpage 323 et en parallèle par une tige de premier élément de référence 331 portant à son extrémité libre le premier élément de référence 330, cette portion de support 314 présente une forme générale de L avec la tige du L orientée selon la direction verticale Z et la base du L parallèle à la direction Y et portant la tête de palpage 323 et le premier élément de référence 330,
- une base 312 prolongée verticalement vers le bas d'une tige 351 de deuxième élément de référence portant à son extrémité libre un deuxième élément de référence 350. Une variante non représentée pourrait ne pas comprendre ce deuxième élément de référence 350 mais seulement la base 312.

La portion de support 314 et la base 312 sont mobiles l'une par rapport à l'autre en direction de l'axe de mesure horizontal Y, selon un mouvement de translation. Ici, la base 312 présente une forme d'étrier, en particulier une forme de U inversé, avec la base du U parallèle à la direction Y et les deux branches du U parallèles à la direction Z. L'une des deux branches du U de la base 312 se prolonge par la tige 351 de deuxième élément de référence et par le deuxième élément de référence 350. Deux pièces de guidage parallèles entre elles et à la direction Y relient l'une à l'autre les deux branches du U pour permettre le mouvement de translation de la portion de support 314. Plus précisément, un rail 344 forme la première pièce de guidage sous forme d'une tige qui présente de préférence une section circulaire et sur laquelle est montée la portion de support 314 au niveau d'une ouverture traversante dans la portion de la tige du L. Egalement, une glissière 345 forme la deuxième pièce de guidage sous forme d'une tige parallèle au rail 344. Pour coopérer en translation avec la glissière 345, cette autre portion de la tige du L présente par exemple une échancrure pour entourer partiellement la glissière 345 ou bien une ouverture traversante formant un passage pour la glissière 345.

Afin d'exercer une force d'appui (flèche A) par la tête de palpage 323 sur la face interne (ou externe) 54 (51) de la pièce qui est par exemple orientée selon la direction verticale et permettre le rappel en position de repos (figure 14A) de la portion de support 314 par rapport à la base le long de l'axe Y, on utilise deux ressorts de compression 346 et 347 formant des moyens de rappel de la portion de support 314. Ces ressorts 346 et 348 sont montés sur le rail de part et d'autre de la portion de support 314. Ces ressorts 346 et 347 comportent une extrémité en contact et en appui sur la portion de support 314 (un ressort pour chaque face) et une extrémité en contact et en appui sur la base 312 (chaque ressort venant en appui sur une branche différente du U de la base 312). Ce sont par exemple, comme dans l'exemple représenté sur les figures 14A et 14B, deux ressorts hélicoïdaux 346 et 347. Dans l'exemple représenté sur les figures 14A et 14B, ce sont deux ressorts 346 et 347 de même longueur et de même résistance à la compression par unité de longueur, ce qui place la position de repos (voir figure 14A) de la portion de support 314 entre les deux bras (extrémités selon la direction de mesure Y) de la base 312. Cependant, on peut adapter les caractéristiques géométriques et/ou physiques de chaque ressort 346 et 347 selon les besoins spécifiques. On comprend que dans cet agencement, la force d'appui A de la tête de palpage 323 sur la pièce 50 dépend de la déformation des ressorts 346 et 347 : ainsi dans le cas de la figure 14B, la tête de palpage 323 appuie sur la face interne 54 de la pièce 50, dans la zone à droite sur la figure sur une portion de face interne 54 verticale, telle que vue par le dispositif de prise de vue ; dans ce cas, on a décalé en translation vers la droite le capteur 310 par rapport à la pièce 50, ce qui a déplacé la portion de support 314 par rapport à la base 312 vers la gauche de la distance dY1 (voir la figure 14B) et mis en compression (davantage) le premier ressort 346 situé à gauche de la portion de support 314. On retrouve ce décalage dY1 entre le premier élément de référence 330 solidaire de la portion de support 314 et le deuxième élément de référence 350 solidaire de la base 312.

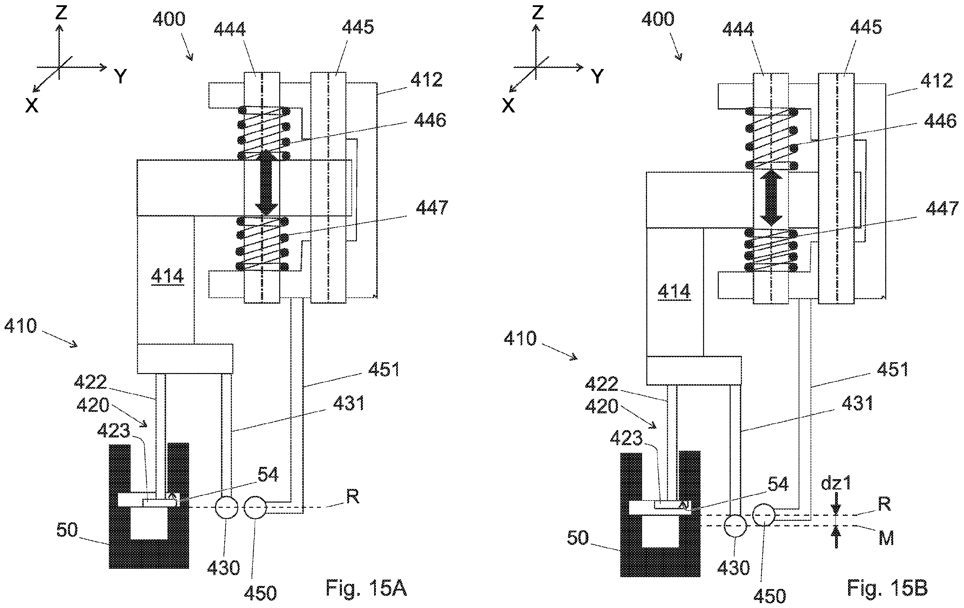

On se reporte maintenant aux figures 15A et 15B représentant un système de mesure 400 selon un quatrième mode de réalisation de l'invention. Dans ce cas, les éléments du système de mesure 400 similaires à ceux du système de mesure 300 selon le troisième mode de réalisation présenté précédemment portent un signe de référence qui est celui du troisième mode de réalisation augmenté d'une valeur de 100. On retrouve un capteur 410 comprenant :
- une portion de support 414 prolongée verticalement vers le bas d'une tige de palpage 422 portant à son extrémité libre une tête de palpage 423 et en parallèle par une tige de premier élément de référence 431 portant à son extrémité libre le premier élément de référence 430, cette portion de support 414 présente une forme générale de U couché avec la base du U orientée selon la direction verticale Z, la branche supérieure du U orientée selon la direction Y et la branche inférieure du U (portant la tête de palpage 423 et le premier élément de référence 430) orientée aussi parallèlement à la direction Y,
- une base 412 prolongée verticalement vers le bas d'une tige 451 de deuxième élément de référence portant à son extrémité libre un deuxième élément de référence 450. Une variante non représentée pourrait ne pas comprendre ce deuxième élément de référence 450 mais seulement la base 412.

La portion de support 414 et la base 412 sont mobiles l'une par rapport à l'autre en direction de l'axe de mesure qui est cette fois l'axe vertical Z, selon un mouvement de translation. Ici, la base 412 présente également une forme d'étrier, en particulier une forme de U couché, avec la base du U parallèle à la verticale Z et les deux branches du U parallèles à la direction de l'axe Y; l'ouverture du U de la portion de support 414 est tournée en direction de la base 412 ; l'ouverture du U de la base 412 est tournée en direction de la portion de support 414 ; L'une des deux branches du U de la base 412 (branche inférieure) se prolonge par la tige 451 de deuxième élément de référence et par le deuxième élément de référence 450, et se trouve partiellement disposée dans le logement délimité par la portion de support 414, tout en moins en projection dans le plan de la figure 15A ou 15B, c'est-à-dire vu en direction X par le dispositif de prise de vue 160 (non représenté). Deux pièces de guidage parallèles entre elles et à la direction Z relient l'une à l'autre les deux branches du U de la base 412 pour permettre le mouvement de translation de la portion de support 414. Plus précisément un rail 444 forme la première pièce de guidage sous forme d'une tige qui présente de préférence une section circulaire et sur laquelle est montée la portion de support 414 au niveau d'une ouverture traversante dans la portion de l'autre des deux branches du U de la base 412 (branche supérieure). Egalement, une glissière 445 forme la deuxième pièce de guidage sous forme d'une tige parallèle au rail 444. Pour coopérer en translation avec la glissière 445, cette autre portion de l'autre des deux branches du U de la base 412 (branche supérieure) présente par exemple une échancrure pour entourer partiellement la glissière 445 ou bien une ouverture traversante formant un passage pour la glissière 445.

Afin d'exercer une force d'appui (flèche A) par la tête de palpage 423 sur une portion de la face interne (ou externe) 54 (51) de la pièce qui est orientée par exemple selon la direction horizontale et permettre le rappel en position de repos (figure 15A) de la portion de support 414 par rapport à la base 412 le long de l'axe vertical Z, on utilise deux ressorts de compression 446 et 447 formant des moyens de rappel de la portion de support 412. Ces ressorts 446 et 447 sont montés sur le rail 444 de part et d'autre de la branche supérieure de la portion de support 414. Ces ressorts 446 et 448 comportent une extrémité en contact et en appui sur la portion de support 414 et une extrémité en contact et en appui sur la base 412 (chaque ressort venant en appui sur une branche différente de la base 412). Ce sont par exemple, comme dans l'exemple représenté sur les figures 15A et 15B, deux ressorts hélicoïdaux 446 et 447. Dans l'exemple représenté sur les figures 15A et 15B, ce sont deux ressorts 446 et 447 de même longueur et de même résistance à la compression par unité de longueur, ce qui place la position de repos (voir figure 15A) de la portion de support 414 entre les deux bras (extrémités selon la direction de mesure Z) de la base 412. Cependant, on peut adapter les caractéristiques géométriques et/ou physiques de chaque ressort 446 et 447 selon les besoins spécifiques. On comprend que dans cet agencement, la force d'appui A de la tête de palpage 423 sur la pièce 50 dépend de la déformation des ressorts : ainsi dans le cas de la figure 15B, la tête de palpage 423 appuie sur la face interne 54 de la pièce 50, dans la zone à droite sur la figure, qui comporte un épaulement rentrant, sur une portion de surface horizontale qui est ici telle que vue par le dispositif de prise de vue ; dans ce cas, on a décalé en translation vers le haut en direction Z le capteur 410 par rapport à la pièce 50, ce qui a déplacé la portion de support 414 par rapport à la base 412 vers le bas de la distance dZ1 (voir la figure 15B) et mis en compression (davantage) le deuxième ressort 447 situé sous la branche supérieure de la portion de support 414. On retrouve ce décalage dZ1 entre le premier élément de référence 430 solidaire de la portion de support 414 et le deuxième élément de référence 450 solidaire de la base 412

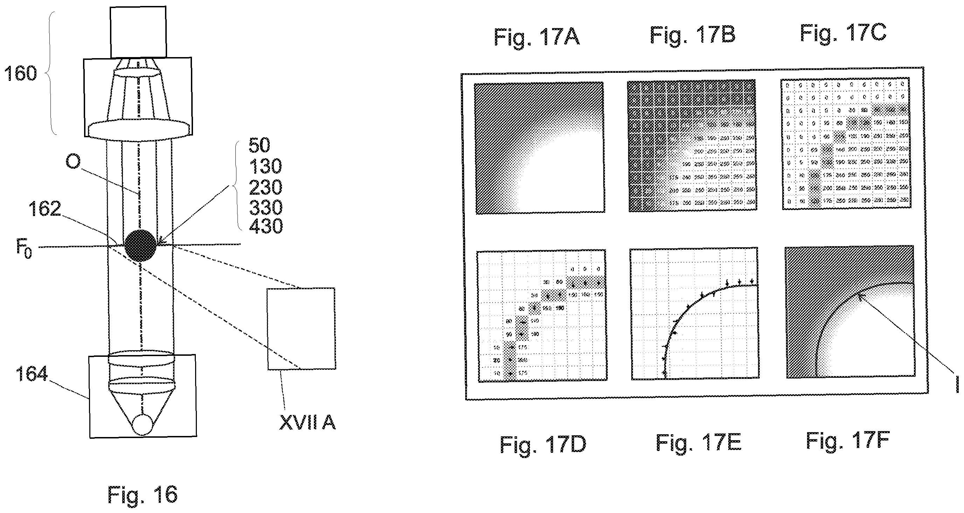

Comme représenté schématiquement sur la figure 16, un dispositif de prise de vue 160 utilisé dans le système de mesure selon l'invention, par exemple selon l'un des modes de réalisation représenté sue les figures et décrit précédemment, comporte :
- une caméra et un ensemble de lentilles permettant de placer le plan focal de ce dispositif de prise de vue 160 sur la pièce 50 et sur le premier élément de référence 130 (230, 330, 430) mais aussi le cas échéant sur le deuxième élément de référence 150 (250, 350, 450). Afin d'améliorer le contraste de l'image prise par le dispositif de prise de vue 160 , dans son champ de vue 162, on place dans un mode de réalisation tel que représenté sur la figure 16 une source de lumière 164 en éclairage arrière par rapport à l'objet (ou aux objets) observé(s) par le dispositif de prise de vue 160. De cette façon, le ou les objets présents dans le champ de vue 162 (de la caméra) du dispositif de prise de vue 160 est /sont placée(s) entre le dispositif de prise de vue 160 et la source de lumière 164. Ce rétro éclairage donne une image telle que celle de la figue 17A (pour une portion de sphère qui est par exemple la tête de palpage), avec un dégradé de gris ou sombre /clair entre la pièce et l'extérieur de la pièce. Un traitement de cette image permet (figures 17B à 17F) permet d'obtenir une image après traitement I qui permet de délimiter très précisément la position du contour de ce ou ces objets visibles par le dispositif de prise de vue 160 (figure 17F).

Dans ce qui précède, on a décrit une technique dans laquelle la détermination de la position du premier élément de référence 130 (et le cas échéant de la position du deuxième élément de référence 150) est effectuée de manière optique par le dispositif de prise de vue 160. La présente invention peut également s'appliquer à la détermination de la position du premier élément de référence 130 (et le cas échéant de la position du deuxième élément de référence 150) d'une autre manière, et notamment par contact entre un autre type de capteur et le premier élément de référence 130 et le cas échéant de la position du deuxième élément de référence 150). Il faut relever que lorsque la détermination de la position du premier élément de référence 130 et le cas échéant de la position du deuxième élément de référence 150) est effectuée de manière optique, cela permet de s'affranchir d'une déformation supplémentaire de la tige 131 (151) du premier (deuxième) élément de référence 130 (150) et donc d'un décalage du premier (deuxième) élément de référence 130 (150) qui modifierait la mesure.

On peut relever des points communs entre tout ou partie de ces modes de réalisation. Notamment entre le système de mesure du premier mode de réalisation 100 (avec le capteur 110 ou la variante avec le capteur 110' couplé avec le deuxième élément de référence 150), du deuxième mode de réalisation 200 et du troisième mode de réalisation 300, ledit système de guidage 140, 240, 340 est un système flexible au moins selon la direction Y. dans le cas du système de mesure du quatrième mode de réalisation 400, ledit système de guidage 440 est un système flexible au moins selon la direction Z.

Egalement, notamment entre le système de mesure du premier mode de réalisation 100, du deuxième mode de réalisation 200, du troisième mode de réalisation 300 et du quatrième mode de réalisation 400, l'un ou l'autre ou plusieurs des dispositions suivantes A à J s'applique(nt) pour un capteur également objet de la présente invention ou pour un système de mesure objet de la présente invention et comprenant un tel capteur :
*Disposition A : le capteur forme un dispositif de palpage mécanique apte à être utilisé pour la détermination du profil interne d'une pièce 50, comprenant :
   - une base,
   - une portion de support reliée de façon élastique à la base par un système de guidage,
   - une tête de palpage montée via une tige de palpage sur la portion de support,
   - une tête de référence montée via une tige de référence sur la portion de support, dans lequel :
   - la tête de référence et la tête de palpage sont situées du côté de la portion de support opposé à ladite base,
   - la tige de référence et la tige de palpage sont disposées dans un plan Y, Z en étant, dans la position de repos du dispositif, parallèles entre elles et à une direction Z.
*Disposition B : ledit système de guidage est agencé de façon que lorsque la tête de palpage entre et reste en contact avec une surface de la pièce, un déplacement relatif entre la tête de palpage et la base est au moins partiellement transmis à la tête de référence via le système de guidage.
*Disposition C: ledit système de guidage est agencé de façon que lorsque la tête de palpage entre et reste en contact avec une surface non parallèle au plan Y, Z, tout déplacement relatif entre la tête de palpage et la base selon la direction Y est au moins partiellement transmis à la tête de référence via le système de guidage.
*Disposition D: ledit système de guidage comporte au moins un élément formant ressort. Notamment, le système de guidage comporte deux lames ressorts parallèles entre elles et reliant ladite portion de support à ladite base, le plan de chaque lame ressort étant, dans la position de repos du dispositif, orthogonal à la direction Y.
*Disposition E: la tête de palpage est montée à l'extrémité libre de la tige de palpage et la tête de référence (premier élément de référence) est montée à l'extrémité libre de la tige de référence.
*Disposition F: la tige de palpage et la tige de référence sont de même longueur
*Disposition G : dispositif comprenant en outre un témoin de calibration (deuxième élément de référence) monté de façon solidaire à la base et situé à proximité de la tête de référence.
   Ce témoin de calibration (deuxième élément de référence) permet de détecter le décalage en Y (ou en Z, ou en X) de la tête de palpage.
*Disposition H: un système de mesure comporte un tel dispositif de palpage mécanique et un dispositif externe avec un capteur externe ( tel que par exemple un dispositif de prise de vue) apte à déterminer la position de la tête de référence (premier élément de référence).
*Disposition I: un tel système de mesure dans lequel le capteur externe est un dispositif optique avec un capteur optique, dont l'axe optique est disposé de manière orthogonal au plan (Y, Z).
Disposition J: la direction de mesure est orthogonale audit axe principal (Z) du capteur (110), par exemple selon la direction horizontale Y.

Le premier mode de réalisation 100, le deuxième mode de réalisation 200, le troisième mode de réalisation 300 et le quatrième mode de réalisation 400 du système de mesure tel que décrits précédemment comportent un capteur mécanique, donc sont des exemples d'une technologie de détermination de profil par contact. Cependant, le système de mesure selon la présente invention peut également se présenter comme un système sans contact.

Un tel système de mesure selon la présente invention peut équiper un banc de mesure, une station de contrôle de pièce en cours d'usinage et peut même être intégré en tant que module d'une machine-outil.

### Numéros de référence employés sur les figures

- X: Axe transversal
- Y: Axe de mesure
- Z: Axe principal (vertical)
- Y0: Distance séparant la tige de palpage de la tige du premier élément de référence
- Z0: Distance séparant la tête de palpage et le premier élément de référence de la portion de support
- dY1: Décalage entre la base et la portion de support en position de mesure
- I0: Largeur rainure 114c
- L0: Longueur rainure 114c
- F1: Flèche (déplacement du capteur 110)
- F2: Flèche (déplacement du capteur 110)
- F3: Flèche (déplacement portion de support par rapport base 112)
- A: Flèche (force d'appui du premier élément de référence 130 sur la pièce 50)
- R: Ligne de référence (verticale passant par le deuxième élément de référence 150)
- M: Ligne de mesure du profil interne de la face interne 54
- C: Ligne suivant le profil interne à mesurer
- 50: Pièce
- 51: Face à mesurer (face externe)
- 52: Logement ( trou, alésage ...)
- 54: Face à mesurer (face interne )
- 100: Système de mesure (premier mode de réalisation)
- 110: Capteur
- 110': Capteur
- 112: Base
- 112a: Première extrémité
- 112b: Deuxième extrémité
- 114: Portion de support
- 114a: Première extrémité de la portion de support
- 114b: Deuxième extrémité de la portion de support
- 114c: Rainure
- 120: Sonde
- 122: Tige de palpage
- 123: Tête de palpage
- 130: Premier élément de référence
- 131: Tige du premier élément de référence
- 140: Système de guidage
- 141: Première lame ressort
- 142: Deuxième lame ressort
- 143: Barreau
- 143a: Première extrémité du barreau
- 143b: Deuxième extrémité du barreau
- 150: deuxième élément de référence
- 151: Tige du deuxième élément de référence
- 160: Dispositif de prise de vue
- 162: Champ de vue du Dispositif de prise de vue
- 164: Source de lumière
- I: Image après traitement
- 200: Système de mesure (deuxième mode de réalisation)
- 210: Capteur
- 212: Base
- 214: Portion de support
- 220: Sonde
- 222: Tige de palpage
- 223: Tête de palpage
- 230: Premier élément de référence
- 231: Tige du premier élément de référence
- 240: Système de guidage
- 241: Masselotte
- 250: deuxième élément de référence
- 251: Tige du deuxième élément de référence
- P: Axe de rotation entre 214 et 212
- L1: Longueur du bras de levier
- 300: Système de mesure (troisième mode de réalisation)
- 310: Capteur
- 312: Base (en forme d'étrier)
- 314: Portion de support (chariot mobile coulissant en forme de L)

- 320: Sonde
- 322: Tige de palpage
- 323: Tête de palpage
- 330: Premier élément de référence
- 331: Tige du premier élément de référence
- 340: Système de guidage
- 344: Rail
- 345: Glissière
- 346: Premier ressort hélicoïdal
- 347: Deuxième ressort hélicoïdal
- 350: deuxième élément de référence
- 351: Tige du deuxième élément de référence
- 400: Système de mesure (troisième mode de réalisation)
- 410: Capteur
- 412: Base (en forme d'étrier)
- 414: Portion de support (chariot mobile coulissant en forme de U)
- 420: Sonde
- 422: Tige de palpage
- 423: Tête de palpage
- 430: Premier élément de référence
- 431: Tige du premier élément de référence
- 440: Système de guidage
- 444: Rail
- 445: Glissière
- 446: Premier ressort hélicoïdal
- 447: Deuxième ressort hélicoïdal
- 450: deuxième élément de référence
- 451: Tige du deuxième élément de référence

## Revendications

1. Système de mesure (100; 200; 300; 400) d'un profil externe d'une pièce (50) ou de profil interne d'une pièce creuse (50), comprenant :
- une pièce (50) dont le profil interne ou externe est à mesurer,
- un capteur (110, 110'; 210; 310; 410) comportant une sonde (120; 220; 320; 420) , un premier élément de référence (130; 230; 330; 430) solidaire de la sonde (120; 220; 320; 420) via une portion de support (114; 214; 314; 414), une base (112; 212; 312; 412) et un système de guidage (140; 240; 340; 440) reliant la sonde (120; 220; 320; 420) avec la base (112; 212; 312; 412) en permettant un déplacement relatif entre eux selon au moins un degré de liberté définissant une direction de mesure,
- ledit capteur (110, 110'; 210; 310; 410) étant arrangé par rapport à la pièce (50) de sorte que lors du déplacement du capteur par rapport à la pièce selon une direction différente de la direction de mesure, ladite sonde (120; 220; 320; 420) est apte à suivre le contour interne ou externe de la pièce (50) tandis que le premier élément de référence (130; 230; 330; 430) est apte à rester à l'extérieur de la pièce (50) en effectuant un trajet reproduisant le trajet de la sonde (120; 220; 320; 420) le long du contour interne ou externe de la pièce (50), et
- un dispositif de prise de vue (160) apte à prendre des images représentant au moins une portion de l'extérieur de la pièce (50) et le premier élément de référence (130; 230; 330; 430),
- des moyens de calcul configurés pour
- détecter le déplacement relatif entre le premier élément de référence (130; 230; 330; 430) et la portion de l'extérieur de la pièce (50) dans ladite direction de mesure par comparaison des images prises par le dispositif de prise de vue (160) et U
- déduire un déplacement relatif entre la sonde (120; 220; 320; 420) et la base (112; 212; 312; 412) qui correspond à un décalage dans la direction de mesure le long du profil mesuré de la pièce (50) à partir dudit déplacement relatif entre le premier élément de référence (130; 230; 330; 430) et la portion de l'extérieur de la pièce (50) dans ladite direction de mesure. U

2. Système de mesure (100; 200; 300; 400) selon la revendication 1, dans lequel le contour interne ou le contour externe de la pièce (50) forme une face de révolution autour d'un axe..

3. Système de mesure (100; 200; 300; 400) selon la revendication 1 ou 2, dans lequel ledit système de guidage (140; 240; 340; 440) autorise un seul degré de liberté entre la sonde (120; 220; 320; 420) et la base (112; 212; 312; 412).

4. Système de mesure (100; 200; 300; 400) selon la revendication 1 ou 2 ou 3, comprenant en outre un deuxième élément de référence (150; 250; 350; 450) solidaire de la base (112; 212; 312; 412) et disposé à l'extérieur de la pièce (50), ledit deuxième élément de référence (150; 250; 350; 450) étant placé de sorte que le dispositif de prise de vue (160) est apte à voir simultanément ledit premier élément de référence (130; 230; 330; 430), ledit deuxième élément de référence (150; 250; 350; 450) et ladite portion de l'extérieur de la pièce (50).

5. Système de mesure (100; 200; 300; 400) selon l'une quelconque des revendications 1 à 4, dans lequel
la sonde (120; 220; 320; 420) comporte une tête de palpage (123) apte à suivre et détecter le contour interne ou externe de la pièce (50) par contact.

6. Système de mesure (100; 200; 300; 400) selon l'une quelconque des revendications 1 à 4, dans lequel
la sonde (120; 220; 320; 420) comporte une tête de détection apte à suivre et détecter le contour interne ou externe de la pièce (50) sans contact.

7. Système de mesure (100; 200; 300; 400) selon l'une quelconque des revendications 1 à 6, dans lequel
le dispositif de prise de vue (160) comporte une caméra et une source lumineuse (164) apte à éclairer simultanément ladite portion de l'extérieur de la pièce (50) et le premier élément de référence (130; 230; 330; 430).

8. Système de mesure (100; 200; 300; 400) selon la revendication 7, dans lequel
la caméra présente un champ (162) de vue permettant de voir ladite portion de l'extérieur de la pièce (50) et le premier élément de référence (130; 230; 330; 430) .

9. Système de mesure (100; 200; 300; 400) selon l'une quelconque des revendications 2 à 8, dans lequel
le système de guidage (140; 240; 340; 440) comporte des moyens de rappel permettant le retour de la sonde (120; 220; 320; 420) dans une position de repos par rapport à la base (112; 212; 312; 412) lorsque la sonde (120; 220; 320; 420) n'est plus en interaction avec le contour interne ou externe de la pièce (50).

10. Système de mesure (100; 200; 300; 400) selon l'une quelconque des revendications 1 à 9, dans lequel
le système de guidage (140; 240; 340; 440) comporte entre la sonde (120; 220; 320; 420) et la base (112; 212; 312; 412) une liaison coulissante ou bien une liaison basculante.

11. Système de mesure (200) selon l'une quelconque des revendications 1 à 9, dans lequel :
- la pièce (50) est creuse et le contour interne de la pièce (50) forme une face (54) de révolution autour d'un axe de révolution,
- la sonde (220) comporte une tête de palpage (223) apte à détecter par contact le contour interne la pièce (50) et à suivre le contour interne la pièce (50) avec un degré de liberté selon une direction (Y) de mesure perpendiculaire audit axe de révolution, cette direction (Y) de mesure séparant entre eux la tête de palpage (223) et le premier élément de référence (230),
- le système de guidage (240) comporte une liaison basculante entre la sonde (120; 220; 320; 420) et la base (112; 212; 312; 412) autour d'un axe (P) perpendiculaire audit axe de révolution et orthogonal à la direction (Y) de mesure.

12. Système de mesure (200) selon la revendication précédente, comportant en outre un deuxième élément de référence (250) solidaire de la base (212) et situé à l'extérieur de la pièce, le dispositif de prise de vue (160) étant apte à prendre une image comprenant en outre le deuxième élément de référence (250), ce par quoi la variation de la position relative entre le premier élément de référence (230) et le deuxième élément de référence (250) permet la mesure du profil du contour interne de la pièce (50).

13. Procédé de mesure d'un profil interne d'une pièce (50) creuse, comprenant les étapes suivantes :
i) fourniture d'un capteur (110, 110'; 210; 310; 410) comportant une sonde (120; 220; 320; 420), un premier élément de référence (130; 230; 330; 430) solidaire de la sonde (120; 220; 320; 420), une base (112; 212; 312; 412) et un système de guidage (140; 240; 340; 440) reliant la sonde (120; 220; 320; 420) avec la base (112; 212; 312; 412) en permettant un déplacement relatif entre eux selon au moins un degré de liberté définissant une direction de mesure, et fourniture d'un dispositif de prise de vue (160),
ii) fourniture d'une pièce (50) creuse dont on souhaite déterminer le profil interne,
iii) placement du capteur (110, 110'; 210; 310; 410) de sorte que la sonde (120; 220; 320; 420) est à l'intérieur de la pièce (50) et détecte un point du profil interne de la pièce (50) tandis que le premier élément de référence (130; 230; 330; 430) est à l'extérieur de la pièce (50) et dans le champ de vue du dispositif de prise de vue (160),
iv) déclenchement du système de prise de vue et formation d'une image représentant au moins une portion de l'extérieur de la pièce (50) et ledit élément de référence,
v) déplacement du capteur (110, 110'; 210; 310; 410) par rapport à la pièce (50) selon un mouvement dans une direction différente de la direction de mesure et permettant à la sonde (120; 220; 320; 420) de rester à l'intérieur de la pièce et de suivre le contour interne de la pièce (50), tandis que le premier élément de référence (130; 230; 330; 430) reste en dehors de la pièce (50) en effectuant le même mouvement que la sonde (120; 220; 320; 420),
vi) effectuer les étapes iv) et v) pour d'autres points du contour interne de la pièce (50)),
dans lequel des moyens de calcul effectuent en outre les étapes suivantes :
a) pour chaque image formée par ledit dispositif de prise de vue (160), calcul de la position relative entre le premier élément de référence (130; 230; 330; 430) et la portion de l'extérieur de la pièce (50), et
b) reconstitution du profil mesuré de la pièce (50) à partir desdites positions relatives du premier élément de référence (130; 230; 330; 430) successivement calculées,
et dans lequel les moyens de calcul effectuent en outre les étapes suivantes :
- comparaison des images prises par le dispositif de prise de vue (160) afin de détecter le déplacement relatif entre le premier élément de référence (130; 230; 330; 430) et la portion de l'extérieur de la pièce (50) dans ladite direction de mesure, et
- déduction à partir dudit déplacement relatif entre le premier élément de référence et la portion de l'extérieur de la pièce d'un un déplacement relatif entre la sonde (120; 220; 320; 420) et la base (112; 212; 312; 412) qui correspond à un décalage dans la direction de mesure le long du profil mesuré de la pièce (50).

14. Procédé de mesure d'un profil externe d'une pièce (50), comprenant les étapes suivantes :
i) fourniture d'un capteur (110, 110'; 210; 310; 410) comportant une sonde (120; 220; 320; 420), un premier élément de référence (130; 230; 330; 430) solidaire de la sonde (120; 220; 320; 420), une base (112; 212; 312; 412) et un système de guidage (140; 240; 340; 440) reliant la sonde (120; 220; 320; 420) avec la base (112; 212; 312; 412) en permettant un déplacement relatif entre eux selon au moins un degré de liberté définissant une direction de mesure, et fourniture d'un dispositif de prise de vue (160),
ii) fourniture d'une pièce (50) dont on souhaite déterminer le profil externe,
iii) placement du capteur (110, 110'; 210; 310; 410) de sorte que la sonde (120; 220; 320; 420) est à l'extérieur de la pièce (50) et détecte un point du profil externe de la pièce (50) tandis que le premier élément de référence (130; 230; 330; 430) est également à l'extérieur de la pièce (50) et dans le champ de vue du dispositif de prise de vue (160),
iv) déclenchement du système de prise de vue et formation d'une image représentant au moins une portion de l'extérieur de la pièce (50) et ledit élément de référence,
v) déplacement du capteur (110, 110'; 210; 310; 410) par rapport à la pièce (50) selon un mouvement dans une direction différente de la direction de mesure et permettant à la sonde (120; 220; 320; 420) de suivre le contour externe de la pièce (50), tandis que le premier élément de référence (130; 230; 330; 430) reste en dehors de la pièce (50) en effectuant le même mouvement que la sonde (120; 220; 320; 420),
vi) effectuer les étapes iv) et v) pour d'autres points du contour externe de la pièce (50),
dans lequel des moyens de calcul effectuent en outre les étapes suivantes :
a) pour chaque image formée par ledit dispositif de prise de vue (160), calcul de la position relative entre le premier élément de référence (130; 230; 330; 430) et la portion de l'extérieur de la pièce (50), et
b) reconstitution du profil mesuré de la pièce (50) à partir desdites positions relatives du premier élément de référence (130; 230; 330; 430) successivement calculées,
et dans lequel les moyens de calcul effectuent en outre les étapes suivantes :
- comparaison des images prises par le dispositif de prise de vue (160) afin de détecter le déplacement relatif entre le premier élément de référence (130; 230; 330; 430) et la portion de l'extérieur de la pièce (50) dans ladite direction de mesure, et
- déduction à partir dudit déplacement relatif entre le premier élément de référence et la portion de l'extérieur de la pièce d'un déplacement relatif entre la sonde (120; 220; 320; 420) et la base (112; 212; 312; 412) qui correspond à un décalage dans la direction de mesure le long du profil mesuré de la pièce (50).

15. Procédé de mesure d'un profil d'une pièce (50), comprenant les étapes suivantes :
i) fourniture d'un capteur (110, 110'; 210; 310; 410) comportant une sonde (120; 220; 320; 420), un premier élément de référence (130; 230; 330; 430) solidaire de la sonde (120; 220; 320; 420), une base (112; 212; 312; 412) et un système de guidage (140; 240; 340; 440) reliant la sonde (120; 220; 320; 420) avec la base (112; 212; 312; 412) en permettant un déplacement relatif entre eux selon au moins un degré de liberté définissant une direction de mesure, et fourniture d'un dispositif de prise de vue (160),
ii) fourniture d'une pièce (50) dont on souhaite déterminer le profil,
iii) placement du capteur (110, 110'; 210; 310; 410) de sorte que la sonde (120; 220; 320; 420) détecte un point du contour de la pièce (50) tandis que le premier élément de référence (130; 230; 330; 430) est à l'extérieur de la pièce (50) et dans le champ de vue du dispositif de prise de vue (160),
iv) déclenchement du système de prise de vue et formation d'une image représentant au moins une portion de l'extérieur de la pièce (50) et ledit élément de référence,
v) déplacement du capteur (110, 110'; 210; 310; 410) par rapport à la pièce (50) selon un mouvement dans une direction différente de la direction de mesure et permettant à la sonde (120; 220; 320; 420) de suivre le contour de la pièce (50), tandis que le premier élément de référence (130; 230; 330; 430) reste en dehors de la pièce (50) en effectuant le même mouvement que la sonde (120; 220; 320; 420),
vi) effectuer les étapes iv) et v) pour d'autres points du contour de la pièce (50),
dans lequel des moyens de calcul effectuent en outre les étapes suivantes :
a) pour chaque image formée par ledit dispositif de prise de vue (160), calcul de la position relative entre le premier élément de référence (130; 230; 330; 430) et la portion de l'extérieur de la pièce (50), et
b) reconstitution du profil mesuré de la pièce (50) à partir desdites positions relatives du premier élément de référence (130; 230; 330; 430) successivement calculées,
et dans lequel les moyens de calcul effectuent en outre les étapes suivantes :
- comparaison des images prises par le dispositif de prise de vue (160) afin de détecter le déplacement relatif entre le premier élément de référence (130; 230; 330; 430) et la portion de l'extérieur de la pièce (50) dans ladite direction de mesure, et
- déduction à partir dudit déplacement relatif entre le premier élément de référence et la portion de l'extérieur de la pièce d'un déplacement relatif entre la sonde (120; 220; 320; 420) et la base (112; 212; 312; 412) qui correspond à un décalage dans la direction de mesure le long du profil mesuré de la pièce (50).

16. Procédé de mesure selon la revendication 14, dans lequel la pièce (50) est creuse et le contour interne de la pièce (50) forme une face (54) de révolution autour d'un axe de révolution,
- la sonde (220) comporte une tête de palpage (223) apte à détecter par contact le contour interne la pièce (50) et à suivre le contour interne la pièce (50) avec un degré de liberté selon une direction (Y) de mesure perpendiculaire audit axe de révolution, cette direction (Y) de mesure séparant entre eux la tête de palpage (223) et le premier élément de référence (230),
- le système de guidage (240) comporte une liaison basculante entre la sonde (120; 220; 320; 420) et la base (112; 212; 312; 412) autour d'un axe (P) perpendiculaire audit axe de révolution et orthogonal à la direction (Y) de mesure.

17. Procédé de mesure selon la revendication 16, dans lequel le capteur (110, 110'; 210; 310; 410) comporte en outre un deuxième élément de référence (250) solidaire de la base (212) et situé à l'extérieur de la pièce (50), le dispositif de prise de vue (160) étant apte à prendre une image comprenant en outre le deuxième élément de référence (250), ce par quoi la variation de la position relative entre le premier élément de référence (230) et le deuxième élément de référence (250) permet la mesure du profil du contour interne de la pièce (50).

## Patentansprüche

1. System zur Messung (100; 200; 300; 400) eines Aussenprofils eines Teils (50) oder des Innenprofils eines hohlen Teils (50), umfassend:
- ein Teil (50), dessen Innen- oder Aussenprofil zu messen ist,
- ein Sensor (110; 110'; 210; 310; 410) mit einer Sonde (120; 220; 320; 420), ein erstes Referenzelement (130; 230; 330; 430), das mit der Sonde (120; 220; 320; 420) über einen Trägerabschnitt (114; 214; 314; 414) fest verbunden ist, eine Basis (112; 212; 312; 412) und ein Führungssystem (140; 240; 340; 440), das die Sonde (120; 220; 320; 420) mit der Basis (112; 212; 312; 412) verbindet, wobei es eine relative Verschiebung zwischen diesen entsprechend mindestens einem Freiheitsgrad, der eine Messrichtung definiert, ermöglicht,
- wobei der Sensor (110; 110'; 210 ;310; 410) relativ zum Teil (50) so angeordnet ist, dass bei der Verschiebung des Sensors relativ zum Teil in einer von der Messrichtung verschiedenen Richtung die Sonde (120; 220; 320; 420) geeignet ist, der inneren oder äusseren Kontur des Teils (50) zu folgen, während das erste Referenzelement (130; 230; 330; 430) geeignet ist, ausserhalb des Teils (50) zu verbleiben, indem es einen Pfad durchläuft, der den Pfad der Sonde (120; 220; 320; 420) entlang der inneren oder äusseren Kontur des Teils (50) reproduziert, und
- eine Bildaufnahmevorrichtung (160), zur Aufnahme von Bildern, die mindestens einen Abschnitt der Aussenseite des Teils (50) und das erste Referenzelement (130; 230; 330; 430) darstellen,
- Rechenmittel, ausgebildet, um
- die relative Verschiebung zwischen dem ersten Referenzelement (130; 230; 330; 430) und dem Abschnitt der Aussenseite des Teils (50) in der Messrichtung mittels Vergleich der von der Bildaufnahmevorrichtung (160) aufgenommenen Bilder zu erfassen und
- eine relative Verschiebung zwischen der Sonde (120; 220; 320; 420) und der Basis (112; 212; 312; 412), die einer Verschiebung in der Messrichtung entlang des gemessenen Profils des Teils (50) entspricht, aus der relativen Verschiebung zwischen dem ersten Referenzelement (130; 230; 330; 430) und dem Abschnitt der Aussenseite des Teils (50) in der Messrichtung abzuleiten.

2. Messsystem (100; 200; 300; 400) nach Anspruch 1, wobei die Innenkontur oder die Aussenkontur des Teils (50) eine Rotationsfläche um eine Achse bildet.

3. Messsystem (100; 200; 300; 400) nach Anspruch 1 oder 2, wobei das Führungssystem (140; 240; 340; 440) einen einzigen Freiheitsgrad zwischen der Sonde (120; 220; 320; 420) und der Basis (112; 212; 312; 412) zulässt.

4. Messsystem (100; 200; 300; 400) nach Anspruch 1, 2 oder 3, ferner umfassend ein zweites Referenzelement (150; 250; 350; 450), das fest mit der Basis (112; 212; 312; 412) verbunden und ausserhalb des Teils (50) angeordnet ist, wobei das zweite Referenzelement (150; 250; 350; 450) derart angeordnet ist, dass die Bildaufnahmevorrichtung (160) dazu geeignet ist, gleichzeitig das erste Referenzelement (130; 230; 330; 430), das zweite Referenzelement (150; 250; 350; 450) und den Abschnitt der Aussenseite des Teils (50) zu erfassen.

5. Messsystem (100; 200; 300; 400) nach einem der Ansprüche 1 bis 4, wobei die Sonde (120; 220; 320; 420) einen Tastkopf (123) umfasst, der geeignet ist, die Innen- oder Aussenkontur des Teils (50) berührungsbehaftet zu verfolgen und zu erfassen.

6. Messsystem (100; 200; 300; 400) nach einem der Ansprüche 1 bis 4, wobei die Sonde (120; 220; 320; 420) einen Erfassungskopf aufweist, der geeignet ist, die Innen- oder Aussenkontur des Teils (50) berührungslos zu verfolgen und zu erfassen.

7. Messsystem (100; 200; 300; 400) nach einem der Ansprüche 1 bis 6, wobei die Bildaufnahmevorrichtung (160) eine Kamera und eine Lichtquelle (164) umfasst, die geeignet ist, den genannten Abschnitt der Aussenseite des Teils (50) und das erste Referenzelement (130; 230; 330; 430) simultan zu beleuchten.

8. Messsystem (100; 200; 300; 400) nach Anspruch 7, wobei
die Kamera ein Sichtfeld (162) aufweist, um den genannten Abschnitt der Aussenseite des Teils (50) und das erste Referenzelement (130; 230; 330; 430) zu erfassen.

9. Messsystem (100; 200; 300; 400) nach einem der Ansprüche 2 bis 8, wobei das Führungssystem (140; 240; 340; 440) Rückstellmittel umfasst, welche die Rückführung der Sonde (120; 220; 320; 420) in eine Ruheposition in Bezug auf die Basis (112; 212; 312; 412) ermöglichen, sofern die Sonde (120; 220; 320; 420) nicht mehr mit der Innen- oder Aussenkontur des Teils (50) in Wechselwirkung steht.

10. Messsystem (100; 200; 300; 400) nach einem der Ansprüche 1 bis 9, wobei das Führungssystem (140; 240; 340; 440) zwischen der Sonde (120; 220; 320; 420) und der Basis (112; 212; 312; 412) eine Gleitverbindung oder eine Kippverbindung umfasst.

11. Messsystem (200) nach einem der Ansprüche 1 bis 9, wobei:
- das Teil (50) hohl ist und die Innenkontur des Teils (50) eine Fläche (54) bildet, die um eine Rotationsachse rotiert,
- die Sonde (220) einen Tastkopf (223) umfasst, der geeignet ist, die Innenkontur des Teils (50) mittels Kontakt zu erfassen und der Innenkontur des Teils (50) mit einem Freiheitsgrad in einer Messrichtung (Y) senkrecht zur Rotationsachse zu folgen, wobei diese Messrichtung (Y) den Tastkopf (223) und das erste Referenzelement (230) voneinander trennt,
- das Führungssystem (240) eine kippbare Verbindung zwischen der Sonde (120; 220; 320; 420) und der Basis (112; 212; 312; 412) um eine Achse (P) senkrecht zur genannten Rotationsachse und orthogonal zu der Messrichtung (Y) aufweist.

12. Messsystem (200) nach dem vorhergehenden Anspruch, das überdies ein zweites Referenzelement (250) umfasst, das fest mit der Basis (212) verbunden ist und sich ausserhalb des Teils befindet, wobei die Bildaufnahmevorrichtung (160) ein Bild aufnehmen kann, das zusätzlich das zweite Referenzelement (250) umfasst, wodurch die Veränderung der relativen Position zwischen dem ersten Referenzelement (230) und dem zweiten Referenzelement (250) die Messung des Profils der Innenkontur des Teils (50) ermöglicht.

13. Verfahren zum Messen eines Innenprofils eines hohlen Teils (50), folgende Schritte umfassend:
i) Bereitstellen eines Sensors (110; 110'; 210; 310; 410) mit einer Sonde (120; 220; 320; 420), einem ersten Referenzelement (130; 230; 330; 430), das fest mit der Sonde (120; 220; 320; 420) verbunden ist, einer Basis (112; 212; 312; 412) und einem Führungssystem (140; 240; 340; 440), das die Sonde (120; 220; 320; 420) mit der Basis (112; 212; 312; 412) verbindet, indem es eine relative Verschiebung zwischen diesen in mindestens einem Freiheitsgrad, der eine Messrichtung definiert, ermöglicht, und Bereitstellung einer Bildaufnahmevorrichtung (160),
ii) Bereitstellung eines hohlen Teils (50), dessen Innenprofil bestimmt werden soll,
iii) Platzieren des Sensors (110; 110'; 210; 310; 410), so dass sich die Sonde (120; 220; 320; 420) innerhalb des Teils (50) befindet und einen Punkt des Innenprofils des Teils (50) erfasst, während sich das erste Referenzelement (130; 230; 330; 430) ausserhalb des Teils (50) und im Sichtfeld der Bildaufnahmevorrichtung (160) befindet,
iv) Auslösen der Bildaufnahmevorrichtung und Erzeugen eines Bildes, das mindestens einen Abschnitt der Aussenseite des Teils (50) und das genannte Referenzelement darstellt,
v) Bewegen des Sensors (110; 110'; 210; 310; 410) relativ zum Teil (50) mit einer Bewegung in einer Richtung, die sich von der Messrichtung unterscheidet und es der Sonde (120; 220; 320; 420) ermöglicht, im Inneren des Teils zu verbleiben und der inneren Kontur des Teils (50) zu folgen, während das erste Referenzelement (130; 230; 330; 430) ausserhalb des Teils (50) verbleibt, indem es die gleiche Bewegung wie die Sonde (120; 220; 320; 420) ausführt,
vi) Durchführen der Schritte iv) und v) für andere Punkte der Innenkontur des Teils (50),
wobei die Rechenmittel zusätzlich die folgenden Schritte durchführen:
a) für jedes von der Bildaufnahmevorrichtung (160) erzeugte Bild berechnen der relativen Position zwischen dem ersten Referenzelement (130; 230; 330; 430) und dem Abschnitt der Aussenseite des Teils (50), und
b) Rekonstruieren des gemessenen Profils des Teils (50) aus den nacheinander berechneten relativen Positionen des ersten Referenzelements (130; 230; 330; 430), und wobei die Rechenmittel zusätzlich die folgenden Schritte durchführen:
- Vergleichen der von der Bildaufnahmevorrichtung (160) aufgenommenen Bilder, um die relative Verschiebung zwischen dem ersten Referenzelement (130; 230; 330; 430) und dem Abschnitt der Aussenseite des Teils (50) in der genannten Messrichtung zu erfassen, und
- Ableiten einer relativen Verschiebung zwischen der Sonde (120; 220; 320; 420) und der Basis (112; 212; 312; 412), die einer Verschiebung in der Messrichtung entlang des gemessenen Profils des Teils (50) entspricht, aus der relativen Verschiebung zwischen dem ersten Referenzelement und der Position der Aussenseite des Teils.

14. Verfahren zum Messen eines Aussenprofils eines Teils (50), folgende Schritte umfassend:
i) Bereitstellen eines Sensors (110; 110'; 210; 310; 410) mit einer Sonde (120; 220; 320; 420), einem ersten Referenzelement (130; 230; 330; 430), das fest mit der Sonde (120; 220; 320; 420) verbunden ist, einer Basis (112; 212; 312; 412) und einem Führungssystem (140; 240; 340; 440), das die Sonde (120; 220; 320; 420) mit der Basis (112; 212; 312; 412) verbindet, indem es eine relative Verschiebung zwischen diesen in mindestens einem Freiheitsgrad, der eine Messrichtung definiert, ermöglicht, und Bereitstellung einer Bildaufnahmevorrichtung (160),
ii) Bereitstellung eines Teils (50), dessen Aussenprofil bestimmt werden soll,
iii) Platzieren des Sensors (110; 110'; 210; 310; 410), so dass sich die Sonde (120; 220; 320; 420) ausserhalb des Teils (50) befindet und einen Punkt auf dem Aussenprofil des Teils (50) erfasst, während sich das erste Referenzelement (130; 230; 330; 430) ebenfalls ausserhalb des Teils (50) und im Sichtfeld der Bildaufnahmevorrichtung (160) befindet,
iv) Auslösen der Bildaufnahmevorrichtung und Erzeugen eines Bildes, das zumindest einen Abschnitt der Aussenseite des Teils (50) und das genannte Referenzelement darstellt,
v) Bewegen des Sensors (110; 110'; 210; 310; 410) relativ zum Teil (50) mit einer Bewegung in einer Richtung, die sich von der Messrichtung unterscheidet und es der Sonde (120; 220; 320; 420) ermöglicht, der Aussenkontur des Teils (50) zu folgen, während das erste Referenzelement (130; 230; 330; 430) ausserhalb des Teils (50) bleibt, indem es dieselbe Bewegung wie die Sonde (120; 220; 320; 420) ausführt,
vi) Durchführen der Schritte iv) und v) für andere Punkte der Aussenkontur des Teils (50),
wobei die Rechenmittel zusätzlich die folgenden Schritte durchführen:
a) für jedes von der Bildaufnahmevorrichtung (160) erzeugte Bild Berechnen der relativen Position zwischen dem ersten Referenzelement (130; 230; 330; 430) und dem Abschnitt der Aussenseite des Teils (50), und
b) Rekonstruieren des gemessenen Profils des Teils (50) aus den nacheinander berechneten relativen Positionen des ersten Referenzelements (130; 230; 330; 430),
und wobei die Rechenmittel ausserdem die folgenden Schritte durchführen:
- Vergleichen der von der Bildaufnahmevorrichtung (160) aufgenommenen Bilder, um die relative Verschiebung zwischen dem ersten Referenzelement (130; 230; 330; 430) und dem Abschnitt der Aussenseite des Teils (50) in der genannten Messrichtung zu erfassen, und
- Ableiten einer relativen Verschiebung zwischen der Sonde (120; 220; 320; 420) und der Basis (112; 212; 312; 412), die einer Verschiebung in der Messrichtung entlang des gemessenen Profils des Teils (50) entspricht, aus der relativen Verschiebung zwischen dem ersten Referenzelement und der Position der Aussenseite des Teils.

15. Verfahren zum Messen eines Profils eines Teils (50), folgende Schritte umfassend:
i) Bereitstellen eines Sensors (110; 110'; 210; 310; 410) mit einer Sonde (120; 220; 320; 420), einem ersten Referenzelement (130; 230; 330; 430), das fest mit der Sonde (120; 220; 320; 420) verbunden ist, einer Basis (112; 212; 312; 412) und einem Führungssystem (140; 240; 340; 440), das die Sonde (120; 220; 320; 420) mit der Basis (112; 212; 312; 412) verbindet, indem es eine relative Verschiebung zwischen diesen in mindestens einem Freiheitsgrad, der eine Messrichtung definiert, ermöglicht, und Bereitstellen einer Bildaufnahmevorrichtung (160),
ii) Bereitstellen eines Teils (50), dessen Profil bestimmt werden soll,
iii) Platzieren des Sensors (110; 110'; 210; 310; 410), so dass die Sonde (120; 220; 320; 420) einen Punkt auf der Kontur des Teils (50) erfasst, während sich das erste Referenzelement (130; 230; 330; 430) ausserhalb des Teils (50) und im Sichtfeld der Bildaufnahmevorrichtung (160) befindet,
iv) Auslösen der Bildaufnahmevorrichtung und Erzeugen eines Bildes, das zumindest einen Abschnitt der Aussenseite des Teils (50) und das genannte Referenzelement darstellt,
v) Bewegen des Sensors (110; 110'; 210; 310; 410) relativ zum Teil (50) mit einer Bewegung in einer Richtung, die sich von der Messrichtung unterscheidet und es der Sonde (120; 220; 320; 420) ermöglicht, der Kontur des Teils (50) zu folgen, während das erste Referenzelement (130; 230; 330; 430) ausserhalb des Teils (50) verbleibt, indem es die gleiche Bewegung wie die Sonde (120; 220; 320; 420) ausführt,
vi) Durchführen der Schritte iv) und v) für andere Punkte auf dem Umriss des Teils (50),
wobei die Rechenmittel ausserdem die folgenden Schritte durchführen:
a) für jedes von der Bildaufnahmevorrichtung (160) erzeugte Bild, Berechnen der relativen Position zwischen dem ersten Referenzelement (130; 230; 330; 430) und dem Abschnitt der Aussenseite des Teils (50), und
b) Rekonstruieren des gemessenen Profils des Teils (50) aus den nacheinander berechneten relativen Positionen des ersten Referenzelements (130; 230; 330; 430),
und wobei die Rechenmittel ausserdem die folgenden Schritte durchführen:
- Vergleichen der von der Bildaufnahmevorrichtung (160) aufgenommenen Bilder, um die relative Verschiebung zwischen dem ersten Referenzelement (130; 230; 330; 430) und dem Abschnitt der Aussenseite des Teils (50) in der genannten Messrichtung zu erfassen, und
- Ableiten einer relativen Verschiebung zwischen der Sonde (120; 220; 320; 420) und der Basis (112; 212; 312; 412), die einer Verschiebung in der Messrichtung entlang des gemessenen Profils des Teils (50) entspricht, aus der relativen Verschiebung zwischen dem ersten Referenzelement und der Position der Aussenseite des Teils.

16. Messverfahren nach Anspruch 14, wobei das Teil (50) hohl ist und die Innenkontur des Teils (50) eine Fläche (54) bildet, die um eine Rotationsachse rotiert,
- die Sonde (220) einen Tastkopf (223) umfasst, der die Innenkontur des Teils (50) berührend erfassen und der Innenkontur des Teils (50) mit einem Freiheitsgrad in einer Messrichtung (Y) senkrecht zur Rotationsachse folgen kann, wobei diese Messrichtung (Y) den Tastkopf (223) und das erste Referenzelement (230) voneinander trennt,
- das Führungssystem (240) eine kippbare Verbindung zwischen der Sonde (120; 220; 320; 420) und der Basis (112; 212; 312; 412) um eine Achse (P) senkrecht zu der genannten Rotationsachse und orthogonal zu der Messrichtung (Y) umfasst.

17. Messverfahren nach Anspruch 16, wobei der Sensor (110; 110'; 210; 310; 410) zusätzlich ein zweites Referenzelement (250) aufweist, das mit der Basis (212) fest verbunden ist und sich ausserhalb des Teils (50) befindet, wobei die Bildaufnahmevorrichtung (160) geeignet ist, ein Bild aufzunehmen, das zusätzlich das zweite Referenzelement (250) umfasst, wodurch die Veränderung der relativen Position zwischen dem ersten Referenzelement (230) und dem zweiten Referenzelement (250) die Messung des Profils der Innenkontur des Teils (50) ermöglicht.

## Claims

1. System (100; 200; 300; 400) for measuring an external profile of a part (50) or an internal profile of a hollow part (50), comprising :
- a part (50) whose internal or external profile is to be measured,
- a sensor (110, 110'; 210; 310; 410) comprising a probe (120; 220; 320; 420), a first reference element (130; 230; 330; 430) fixedly coupled with the probe (120; 220; 320; 420) via a support portion (114; 214; 314; 414), a base (112; 212; 312; 412) and a guide system (140; 240; 340; 440) connecting the probe (120; 220; 320; 420) with the base (112; 212; 312; 412), allowing relative movement between them along at least one degree of freedom defining a measurement direction,
- said sensor (110, 110'; 210; 310; 410) being arranged relative to the part (50) so that during the movement of the sensor relative to the part in a direction different from the measurement direction, said probe (120; 220; 320; 420) is able to follow the internal or external contour of the part (50), while the first reference element (130; 230; 330; 430) is able to remain outside the part (50), following a path reproducing the path of the probe (120; 220; 320; 420) along the internal or external contour of the part (50), and
- an image-taking device (160) capable of taking images representing at least a portion of the outside of the part (50) and the first reference element (130; 230; 330; 430),
- calculating means configured to
- detect the relative displacement between the first reference element (130; 230; 330; 430) and the portion of the outside of the part (50) in said measurement direction by comparing the images taken by the image-taking device (160), and
- deduce a relative displacement between the probe (120; 220; 320; 420) and the base (112; 212; 312; 412) which corresponds to an offset in the measurement direction along the measured profile of the part (50) from said relative displacement between the first reference element (130; 230; 330; 430) and the portion of the outside of the part (50) in said measurement direction.

2. Measuring system (100; 200; 300; 400) according to claim 1, wherein the inner contour or the outer contour of the part (50) forms a face of revolution around an axis.

3. Measuring system (100; 200; 300; 400) according to claim 1 or 2, wherein said guide system (140; 240; 340; 440) allows a single degree of freedom between the probe (120; 220; 320; 420) and the base (112; 212; 312; 412).

4. Measuring system (100; 200; 300; 400) according to claim 1 or 2 or 3, further comprising a second reference element (150; 250; 350; 450) fixedly coupled with the base (112; 212; 312; 412) and arranged outside the part (50), said second reference element (150; 250; 350; 450) being positioned so that the image-taking device (160) is able to simultaneously see said first reference element (130; 230; 330; 430), said second reference element (150; 250; 350; 450) and said portion of the outside of the part (50).

5. Measuring system (100; 200; 300; 400) according to any one of claims 1 to 4, wherein
the probe (120; 220; 320; 420) comprises a feeler head (123) able to follow and detect the internal or external contour of the part (50) by contact.

6. Measuring system (100; 200; 300; 400) according to any one of claims 1 to 4, wherein
the probe (120; 220; 320; 420) comprises a detection head able to follow and detect the internal or external contour of the part (50) without contact.

7. Measuring system (100; 200; 300; 400) according to any one of claims 1 to 6, wherein
the image-taking device (160) comprises a video camera and a light source (164) capable of simultaneously illuminating said portion of the outside of the part (50) and the first reference element (130; 230; 330; 430).

8. Measuring system (100; 200; 300; 400) according to claim 7, wherein
the video camera has a field of view (162) able to see said portion of the outside of the part (50) and the first reference element (130; 230; 330; 430).

9. Measuring system (100; 200; 300; 400) according to any one of claims 2 to 8, wherein
the guide system (140; 240; 340; 440) comprises return means enabling the probe (120; 220; 320; 420) to return to a rest position relative to the base (112; 212; 312; 412) when the probe (120; 220; 320; 420) is no longer interacting with the internal or external contour of the part (50).

10. Measuring system (100; 200; 300; 400) according to any one of claims 1 to 9, wherein
the guide system (140; 240; 340; 440) comprises a sliding or tilting connection between the probe (120; 220; 320; 420) and the base (112; 212; 312; 412).

11. Measuring system (200) according to any one of claims 1 to 9, in which :
- the part (50) is hollow and the internal contour of the part (50) forms a face (54) of revolution about an axis of revolution,
- the probe (220) comprises a feeler head (223) able to detect the internal contour of the part (50) by contact and to follow the internal contour of the part (50) with a degree of freedom in a measurement direction (Y) perpendicular to said axis of revolution, said measurement direction (Y) separating the feeler head (223) and the first reference element (230) from one another,
- the guide system (240) comprises a tilting connection between the probe (120; 220; 320; 420) and the base (112; 212; 312; 412) about an axis (P) perpendicular to said axis of revolution and orthogonal to the measurement direction (Y).

12. Measuring system (200) according to the preceding claim, further comprising a second reference element (250) fixedly coupled with the base (212) and located outside the part, the image-taking device (160) being capable of taking an image further comprising the second reference element (250), whereby variation of the relative position between the first reference element (230) and the second reference element (250) enables measurement of the profile of the internal contour of the part (50).

13. Method of measuring an internal profile of a hollow part (50), comprising the following steps:
i) providing a sensor (110, 110'; 210; 310; 410) comprising a probe (120; 220; 320; 420), a first reference element (130; 230; 330; 430) fixedly coupled with the probe (120; 220; 320; 420), a base (112; 212; 312; 412) and a guide system (140; 240; 340; 440) connecting the probe (120; 220; 320; 420) with the base (112; 212; 312; 412) while allowing relative displacement between them in at least one degree of freedom defining a measurement direction, and providing an image-taking device (160),
ii) providing a hollow part (50) whose internal profile is to be determined,
iii) positioning the sensor (110, 110'; 210; 310; 410) so that the probe (120; 220; 320; 420) is inside the part (50) and detects a point on the internal profile of the part (50), while the first reference element (130; 230; 330; 430) is outside the part (50) and in the field of view of the image-taking device (160),
iv) triggering of the image-taking system and forming an image representing at least a portion of the outside of the part (50) and said reference element,
v) moving the sensor (110, 110'; 210; 310; 410) relative to the part (50) according to a movement in a direction different from the measurement direction, enabling the probe (120; 220; 320; 420) to remain inside the part and follow the internal contour of the part (50), while the first reference element (130; 230; 330; 430) remains outside the part (50), making the same movement as the probe (120; 220; 320; 420),
vi) performing steps iv) and v) for other points on the internal contour of the part (50),
wherein calculating means further perform the following steps :
a) for each image formed by said image-taking device (160), calculating the relative position between the first reference element (130; 230; 330; 430) and the portion of the outside of the part (50), and
b) reconstituting the measured profile of the part (50) from said successively calculated relative positions of the first reference element (130; 230; 330; 430), and wherein the calculating means further perform the following steps :
- comparing the images taken by the image-taking device (160) in order to detect the relative displacement between the first reference element (130; 230; 330; 430) and the portion of the outside of the part (50) in said measurement direction, and
- deducing from said relative displacement between the first reference element and the position of the outside of the part a relative displacement between the probe (120; 220; 320; 420) and the base (112; 212; 312; 412) which corresponds to an offset in the measurement direction along the measured profile of the part (50).

14. Method of measuring an external profile of a part (50), comprising the following steps:
i) providing a sensor (110, 110'; 210; 310; 410) comprising a probe (120; 220; 320; 420), a first reference element (130; 230; 330; 430) fixedly coupled with the probe (120; 220; 320; 420), a base (112; 212; 312; 412) and a guide system (140; 240; 340; 440) connecting the probe (120; 220; 320; 420) with the base (112; 212; 312; 412) while allowing relative displacement between them in at least one degree of freedom defining a measurement direction, and providing an image-taking device (160),
ii) providing a part (50) whose external profile is to be determined,
iii) positioning the sensor (110, 110'; 210; 310; 410) so that the probe (120; 220; 320; 420) is outside the part (50) and detects a point on the external profile of the part (50), while the first reference element (130; 230; 330; 430) is also outside the part (50) and in the field of view of the image-taking device (160),
iv) triggering of the image-taking system and forming an image representing at least a portion of the outside of the part (50) and said reference element,
v) moving the sensor (110, 110'; 210; 310; 410) relative to the part (50) according to a movement in a direction different from the measurement direction, enabling the probe (120; 220; 320; 420) to follow the external contour of the part (50), while the first reference element (130; 230; 330; 430) remains outside the part (50), making the same movement as the probe (120; 220; 320; 420),
vi) performing steps iv) and v) for other points on the external contour of the part (50),
wherein calculating means further perform the following steps :
a) for each image formed by said image-taking device (160), calculating the relative position between the first reference element (130; 230; 330; 430) and the portion of the outside of the part (50), and
b) reconstituting the measured profile of the part (50) from said successively calculated relative positions of the first reference element (130; 230; 330; 430), and wherein the calculating means further perform the following steps :
- comparing the images taken by the image-taking device (160) in order to detect the relative displacement between the first reference element (130; 230; 330; 430) and the portion of the outside of the part (50) in said measurement direction, and
- deducing from said relative displacement between the first reference element and the position of the outside of the part a relative displacement between the probe (120; 220; 320; 420) and the base (112; 212; 312; 412) which corresponds to an offset in the measurement direction along the measured profile of the part (50).

15. Method of measuring a profile of a part (50), comprising the following steps:
i) providing a sensor (110, 110'; 210; 310; 410) comprising a probe (120; 220; 320; 420), a first reference element (130; 230; 330; 430) fixedly coupled with the probe (120; 220; 320; 420), a base (112; 212; 312; 412) and a guide system (140; 240; 340; 440) connecting the probe (120; 220; 320; 420) with the base (112; 212; 312; 412) while allowing relative displacement between them in at least one degree of freedom defining a measurement direction, and providing an image-taking device (160),
ii) providing of a part (50) whose profile is to be determined,
iii) positioning the sensor (110, 110'; 210; 310; 410) so that the probe (120; 220; 320; 420) detects a point on the contour of the part (50) while the first reference element (130; 230; 330; 430) is outside the part (50) and in the field of view of the image-taking device (160),
iv) triggering of the image-taking system and forming of an image representing at least a portion of the outside of the part (50) and said reference element,
v) moving the sensor (110, 110'; 210; 310; 410) relative to the part (50) according to a movement in a direction different from the measurement direction, enabling the probe (120; 220; 320; 420) to follow the contour of the part (50), while the first reference element (130; 230; 330; 430) remains outside the part (50), making the same movement as the probe (120; 220; 320; 420),
vi) performing steps iv) and v) for other points on the contour of the part (50), wherein, the calculating means further perform the following steps :
a) for each image formed by said image-taking device (160), calculating the relative position between the first reference element (130; 230; 330; 430) and the portion of the outside of the part (50), and
b) reconstituting the measured profile of the part (50) from said successively calculated relative positions of the first reference element (130; 230; 330; 430), and wherein the calculating means further perform the following steps :
- comparing the images taken by the image-taking device (160) in order to detect the relative displacement between the first reference element (130; 230; 330; 430) and the portion of the outside of the part (50) in said measurement direction, and
- deducing from said relative displacement between the first reference element and the position of the outside of the part a relative displacement between the probe (120; 220; 320; 420) and the base (112; 212; 312; 412) which corresponds to an offset in the measurement direction along the measured profile of the part (50).

16. Measuring method according to claim 14, wherein the part (50) is hollow and the internal contour of the part (50) forms a face (54) of revolution about an axis of revolution,
- the probe (220) comprises a feeler head (223) able to detect by contact the internal contour of the part (50) and to follow the internal contour of the part (50) with a degree of freedom in a measurement direction (Y) perpendicular to said axis of revolution, this measurement direction (Y) separating the feeler head (223) and the first reference element (230) from one another,
- the guide system (240) comprises a tilting connection between the probe (120; 220; 320; 420) and the base (112; 212; 312; 412) about an axis (P) perpendicular to said axis of revolution and orthogonal to the measurement direction (Y).

17. Measurement method according to claim 16, wherein the sensor (110, 110'; 210; 310; 410) further comprises a second reference element (250) fixedly coupled with the base (212) and located outside the part (50), the image-taking device (160) being capable of taking an image further comprising the second reference element (250), whereby the variation of the relative position between the first reference element (230) and the second reference element (250) enables measurement of the profile of the internal contour of the part (50).
